# EUROPEAN PATENT APPLICATION

(11) **EP 4 657 969 A1**
(43) Date of publication of application: **03.12.2025**
(21) Application number: 24756089.9
(22) Date of filing: 05.02.2024
(51) Int. Cl.: H04W 76/27

(54) **COMMUNICATION METHOD AND COMMUNICATION APPARATUS**

(30) Priority: 16.02.2023 CN 202310153131
(71) Applicant: Huawei Technologies Co., Ltd., Shenzhen, Guangdong 518129 (CN)
(72) Inventor: ZHU, Shichao, Shenzhen, Guangdong 518129 (CN); ZHU, Yuanping, Shenzhen, Guangdong 518129 (CN); SUN, Fei, Shenzhen, Guangdong 518129 (CN); SHI, Yulong, Shenzhen, Guangdong 518129 (CN)
(74) Representative: Epping - Hermann - Fischer
(86) International application number: PCT/CN2024/075910
(87) International publication number: WO 2024/169715

(57) **Abstract**

This application relates to the field of communication technologies, and provides a communication method and a communication apparatus. This application may be applied to DU migration in an IAB network. The method includes: generating first information, where the first information indicates a third CU to request, from a second CU, downlink configuration information used for transmission over an F1 interface, there is an RRC connection between the second CU and an MT of a relay node, and the third CU is a target donor-CU of a DU of the relay node; and sending the first information to the third CU. In embodiments of this application, the first information is sent to the third CU, so that the third CU obtains the downlink configuration information used for the transmission over the F1 interface, and therefore the F1 interface between the third CU and the DU of the relay node is set up.

## Description

This application claims priority to Chinese Patent Application No. 202310153131.2, filed with the China National Intellectual Property Administration on February 16, 2023 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

Compared with a 4th generation mobile communication system, 5th generation (5G) mobile communication imposes more stringent requirements on various network performance indicators, for example, a requirement for increasing a capacity by 1000 times, a requirement for wider coverage, and a requirement for ultra-high reliability and ultra-low latency. Considering that high-frequency carriers have rich frequency resources, it is increasingly popular to perform high-frequency small cell networking in hotspot areas, to satisfy a 5G ultra-high capacity requirement. The high-frequency carriers are characterized by poor propagation, are severely attenuated if blocked, and have small coverage. Therefore, a large quantity of small cells need to be densely deployed. Correspondingly, it is costly to provide fiber backhaul for the large quantity of densely deployed small cells, and construction is difficult. Therefore, an economical and convenient backhaul solution is required. In addition, in consideration of the requirement for wider coverage, it is difficult and costly to deploy optical fibers for network coverage in some remote areas. Therefore, a flexible and convenient access and backhaul solution also needs to be designed. An integrated access and backhaul (integrated access and backhaul, IAB) technology provides an idea to resolve the foregoing two problems: In the IAB technology, a wireless transmission solution is used for both an access link (access link) and a backhaul link (backhaul link), to reduce optical fiber deployment.

In an IAB network, a relay node, or referred to as an IAB-node (IAB-node), may provide a wireless access service for a user equipment (UE, user equipment). Transmission of service data of the UE is performed by the IAB-node connected to an IAB-donor (IAB-donor) over a wireless backhaul link. The IAB-node includes a mobile termination (mobile termination, MT) part and a distributed unit (distributed unit, DU) part. When being oriented to a parent node of the IAB-node, the IAB-node may serve as a terminal device, that is, a role of the MT. When being oriented to a child node (the child node may be another IAB-node or a UE) of the IAB-node, the IAB-node is considered as a network device, that is, a role of the DU. The IAB-donor is an access network element having a complete base station (for example, gNB) function, and includes a central unit (central unit, CU) and a distributed unit (distributed unit, DU). The IAB-donor is connected to a core network (for example, connected to a 5G core network) that serves the UE.

IAB-node inter-CU migration may be implemented in two manners: full migration (full migration) and partial migration (partial migration). In the partial migration, inter-CU handover is performed on an MT of an IAB-node, namely, a boundary node (boundary node), on which the migration is performed, but a DU of the boundary node still maintains an F1 connection to a source CU. However, in the full migration, the DU of the boundary node needs to set up an F1 connection to a target (target) donor-CU. An essential difference between the full migration and the partial migration lies in whether DU migration needs to be performed (in fact, a new logical DU may be generated and then an F1 interface is set up with the target donor-CU, which may also be usually described as the "DU migration" from a macro perspective of the IAB-node). When target donor-CUs (namely, CUs to be handed over to) of the MT and the DU are the same (in other words, the MT needs to be migrated before or after the DU is migrated, and the DU and the MT are migrated to the same target CU), downlink configuration information used for transmission over the F1 interface is allocated by the target CU. Currently, a solution in which a DU is migrated and an MT is not migrated, namely, a solution in which a target donor-CU of a DU (the CU to which the DU needs to be migrated to) is different from a CU accessed by the MT, is being researched in the industry. Therefore, when a DU is migrated and an MT is not migrated, how a target donor-CU of the DU learns of downlink configuration information used for transmission over a target F1 interface (namely, the F1 interface between the target donor-CU and the DU) needs to be studied.

### SUMMARY

Embodiments of this application disclose a communication method and a communication apparatus, to enable a target donor-CU of a DU to obtain downlink configuration information used for transmission over an F1 interface, and therefore the F1 interface can be set up.

According to a first aspect, an embodiment of this application provides a communication method. The method includes: generating first information, where the first information indicates a third CU to request, from a second CU, downlink configuration information used for transmission over an F1 interface, there is a radio resource control (radio resource control, RRC) connection between the second CU and an MT of a relay node, or the second CU is a target CU to which the MT is to be handed over, and the third CU is a target donor-CU of a DU of the relay node; and sending the first information to the third CU. The downlink configuration information used for the transmission over the F1 interface includes a differentiated services code point (differentiated services code point, DSCP) and/or a flow label (flow label) used for the transmission over the F1 interface. The relay node may be an IAB-node or another node having a DU part and an MT part. The target donor-CU of the DU of the relay node may be a CU to which the DU of the relay node is to be migrated. The method in the first aspect may be performed by a first CU or the relay node, and the first CU is a source donor-CU of the DU of the relay node, in other words, there is the F1 interface between the DU of the relay node and the first CU. Optionally, the first information indicates the third CU to request, from the second CU, the downlink configuration information used for the transmission over the to-be-set-up F1 interface between the third CU and the DU of the relay node.

In this embodiment of this application, the first information is sent to the third CU, where the first information indicates the third CU to request, from the second CU, the downlink configuration information used for the transmission over the F1 interface, so that the third CU obtains the downlink configuration information used for the transmission over the F1 interface, and therefore the F1 interface can be set up.

In a possible implementation, the first information includes at least one of identification information of the second CU, identification information of the DU of the relay node, or identification information for identifying the MT at the second CU. The identification information of the second CU may include a gNB ID and/or an internet protocol (internet protocol, IP) address of the second CU. The identification information of the DU of the relay node may include at least one of the following: a gNB-DU ID and/or an IP address of the DU of the relay node, a BAP address, at the second CU, of the relay node to which the MT belongs, an IP address that is of the relay node to which the MT belongs and that is used for traffic transmission over the F1 interface, a cell radio network temporary identifier (cell radio network temporary identifier, C-RNTI) of the MT, and a serving cell identifier of the MT. The identification information for identifying the MT at the second CU may include a UE XnAP ID of the MT at the second CU. The DU of the relay node may be a new logical DU generated by the relay node, namely, a logical DU generated for DU migration. The first information may further include a UE XnAP ID of the MT at the first CU. In this implementation, the first information is sent to the third CU, so that the third CU requests, from the second CU based on the first information, the downlink configuration information used for the transmission over the F1 interface.

In a possible implementation, the first information further indicates a binding relationship between the MT and the DU of the relay node.

In this implementation, the first information may enable the third CU to learn of the binding relationship between the MT and the DU of the relay node.

In a possible implementation, the first information indicates the third CU to send a cross-topology traffic migration request to the second CU (for example, send an IAB Transport Migration Management Request message to the second CU), to request, from the second CU, the downlink configuration information used for the transmission over the F1 interface.

In a possible implementation, before sending the first information to the third CU, the method further includes: receiving second information from the relay node, where the second information includes the identification information of the DU of the relay node. For example, the second information from the DU (not the generated logical DU) of the relay node is received. The second information may be carried in a gNB-DU Configuration Update message.

In this implementation, the second information from the relay node is received, so that the identification information of the DU of the relay node can be obtained, for sending the first information.

In a possible implementation, before sending the first information to the third CU, the method further includes: selecting the third CU as the target donor-CU of the DU of the relay node, where an IP connection or an Xn interface exists, or an Xn interface can be set up between the third CU and the second CU.

The traffic of the F1 interface between the third CU and the DU of the relay node needs to be transmitted through a topology of the second CU, where transmission between a donor-DU of the second CU and the third CU is performed through an IP network. Therefore, it needs to be ensured that an IP connection between the donor-DU of the second CU and the third CU exists (which may be referred to as "the donor-DU of the second CU and the third CU are IP reachable between each other"). It is generally considered that IP reachability (namely, IP reachable) between the donor-DU of the second CU and the third CU is equivalent to IP reachability between the second CU and the third CU (because the donor-DU of the second CU and the second CU should be IP reachable between each other). Therefore, when selecting the target donor-CU of the DU, the first CU needs to consider IP reachability between the target donor-CU of the DU and the second CU. Alternatively, a determining condition that is stricter than IP reachable may be used: The XN interface exists or can be set up. In this implementation, the third CU is selected as the target donor-CU of the DU of the relay node, so that traffic of the to-be-set-up F1 interface between the DU of the relay node and the third CU can be transmitted through the topology of the second CU.

In a possible implementation, selecting the third CU as the target donor-CU of the DU of the relay node includes: selecting, based on a network segment to which the IP address belongs, the third CU that has the IP connection to the second CU as the target donor-CU of the DU of the relay node; or selecting the third CU in a pre-configured target list as the target donor-CU of the DU of the relay node, where an IP connection or an Xn interface exists, or an Xn interface can be set up between a CU in the target list and the second CU.

In this implementation, the third CU that has the IP connection to the second CU, has the Xn interface with the second CU, or can set up the Xn interface with the second CU is selected as the target donor-CU of the DU of the relay node.

In a possible implementation, the method further includes: receiving first reference information from the second CU through an XN interface, where the first reference information indicates that the IP connection or the Xn interface exists, or the Xn interface can be set up between the second CU and the third CU; and determining, based on the first reference information, that the IP connection or the Xn interface exists, or the Xn interface can be set up between the second CU and the third CU. For example, the first reference information includes a plurality of CUs (including the third CU) that have IP connections to the second CU, have Xn interfaces with the second CU, or can set up Xn interfaces with the second CU.

In this implementation, it is determined, based on the first reference information, that the IP connection or the Xn interface exists, or the Xn interface can be set up between the second CU and the third CU, so that the third CU is selected as the target donor-CU of the DU of the relay node.

In a possible implementation, the method further includes: receiving second reference information from the third CU through an XN interface, where the second reference information indicates that the IP connection or the Xn interface exists, or the Xn interface can be set up between the second CU and the third CU; and determining, based on the second reference information, that the IP connection or the Xn interface exists, or the Xn interface can be set up between the second CU and the third CU. For example, the second reference information includes a plurality of CUs (including the second CU) that have IP connections to the third CU, have Xn interfaces with the third CU, or can set up Xn interfaces with the third CU.

In this implementation, it is determined, based on the second reference information, that the IP connection or the Xn interface exists, or the Xn interface can be set up between the second CU and the third CU, so that the third CU is selected as the target donor-CU of the DU of the relay node.

In a possible implementation, the second information is from the DU of the relay node, and the second information further includes identification information of the third CU. The identification information of the third CU includes a gNB ID and/or an IP address of the third CU.

In this implementation, the second information further includes the identification information of the third CU, to determine to set up the F1 interface between the DU of the relay node and the third CU.

In a possible implementation, the second information indicates the first CU to trigger the third CU to request, from the second CU, the downlink configuration information used for the transmission over the F1 interface, and the first CU is the source donor-CU of the DU of the relay node.

In this implementation, the second information indicates the first CU to trigger the third CU to request, from the second CU, the downlink configuration information used for the transmission over the F1 interface, so that the first CU triggers, in a timely manner, the third CU to request, from the second CU, the downlink configuration information used for the transmission over the F1 interface.

In a possible implementation, the second information indicates the first CU to trigger the third CU to initiate cross-topology traffic migration to the second CU. For example, the second information carries first indication information, and the first indication information indicates the first CU to trigger the third CU to initiate the cross-topology procedure migration to the second CU. For another example, the second information implicitly indicates the first CU to trigger the third CU to initiate the cross-topology procedure migration to the second CU. In other words, the second information has an implicit indication function.

In this implementation, the second information indicates the first CU to trigger the third CU to initiate the cross-topology procedure migration to the second CU, and the first CU triggers, in a timely manner, the third CU to initiate the cross-topology procedure migration to the second CU. In a possible implementation, the first information further indicates the third CU to set up the F1 interface with the DU of the relay node.

In a possible implementation, the first information further indicates the third CU to migrate traffic of the F1 interface between the third CU and the DU of the relay node to the topology of the second CU.

In a possible implementation, sending the first information to the third CU includes: sending, by the DU of the relay node, the first information to the third CU, where the first information is carried in an F1 setup request (F1 SETUP REQUEST) message.

In a possible implementation, sending the first information to the third CU includes: sending, by the DU of the relay node, the first information to the third CU, where the first information includes the identification information for identifying the MT at the second CU.

According to a second aspect, an embodiment of this application provides another communication method. The method includes: receiving first information, where the first information indicates a third CU to request, from a second CU, downlink configuration information used for transmission over an F1 interface, there is an RRC connection between the second CU and an MT of a relay node, or the second CU is a target CU to which the MT is to be handed over, and the third CU is a target donor-CU of a DU of the relay node; and sending third information to the second CU, where the third information is used to request the downlink configuration information used for the transmission over the F1 interface. The method in the second aspect is performed by the third CU. Optionally, the first information indicates the third CU to request, from the second CU, the downlink configuration information used for the transmission over the to-be-set-up F1 interface between the third CU and the DU of the relay node.

In this embodiment of this application, the third information is sent to the second CU, to request the downlink configuration information used for the transmission over the F1 interface, so that the third CU establishes the F1 interface with the DU of the relay node.

In a possible implementation, the first information includes at least one of identification information of the second CU, identification information of the DU of the relay node, or identification information for identifying the MT at the second CU.

In this implementation, the downlink configuration information used for the transmission over the F1 interface can be requested from the second CU based on the information included in the first information.

In a possible implementation, the first information further indicates a binding relationship between the MT and the DU of the relay node. The identification information for identifying the MT at the second CU includes a UE XnAP ID of the MT at the second CU.

In this implementation, the first information may enable the third CU to learn of the binding relationship between the MT and the DU of the relay node.

In a possible implementation, the first information indicates the third CU to send a cross-topology traffic migration request to the second CU, to request, from the second CU, the downlink configuration information used for the transmission over the F1 interface.

In a possible implementation, the third information is further used to request to obtain the binding relationship between the MT and the DU of the relay node. The third information may include a UE XnAP ID of the MT at the third CU.

In this implementation, the third information is sent to the second CU, so that the binding relationship between the MT and the DU of the relay node can be further obtained.

In a possible implementation, the first information is from the DU of the relay node, and the first information is carried in an F1 setup request message (namely, an F1 SETUP REQUEST message). In this implementation, the first information is carried in the F1 setup request message, and no additional information needs to be sent to indicate the third CU to request, from the second CU, the downlink configuration information used for the transmission over the F1 interface, so that signaling overheads can be reduced.

In a possible implementation, the first information is from the DU of the relay node, and the first information includes the identification information for identifying the MT at the second CU; and the method further includes: sending, to the second CU based on the identification information for identifying the MT at the second CU, information used to obtain the binding relationship between the DU of the relay node and the MT.

In this implementation, the information used to obtain the binding relationship between the DU and the MT of the relay node is sent to the second CU, so that information about the binding relationship between the DU and the MT of the relay node can be obtained.

In a possible implementation, the identification information of the MT includes at least one of the following: a backhaul adaptation protocol (backhaul adaptation protocol, BAP) address, at the second CU, of the relay node to which the MT belongs, an IP address that is of the relay node to which the MT belongs and that is used for traffic transmission over the F1 interface, a C-RNTI of the MT, and a serving cell (cell) identifier of the MT.

In a possible implementation, the method further includes: sending fourth information to the second CU, where the fourth information includes a correspondence between an IP address used for the transmission over the F1 interface and a DSCP or flow label used for the transmission over the F1 interface.

In this implementation, the fourth information is sent to the second CU, so that the second CU can obtain the correspondence between the IP address used for the transmission over the F1 interface and the DSCP or flow label used for the transmission over the F1 interface.

In a possible implementation, the method further includes: receiving sixth information from the second CU, where the sixth information includes the downlink configuration information used for the transmission over the F1 interface and the identification information for identifying the MT at the second CU, for example, the UE XnAP ID of the MT at the second CU.

In a possible implementation, the first information further indicates the third CU to set up the F1 interface with the DU of the relay node.

According to a third aspect, an embodiment of this application provides another communication method. The method includes: receiving fifth information, where the fifth information indicates a second CU to send first information to a third CU, the first information indicates the third CU to request, from the second CU, downlink configuration information used for transmission over an F1 interface, there is an RRC connection between the second CU and an MT of a relay node, or the second CU is a target CU to which the MT is to be handed over, and the third CU is a target donor-CU of a DU of the relay node; and sending the first information to the third CU. Alternatively, the fifth information indicates the second CU to trigger the third CU to initiate cross-topology traffic migration to the second CU, and the first information is used to trigger the third CU to initiate the cross-topology traffic migration to the second CU. Optionally, the first information indicates the third CU to request, from the second CU, the downlink configuration information used for the transmission over the to-be-set-up F1 interface between the third CU and the DU of the relay node.

In this embodiment of this application, the first information is sent to the third CU, so that the third CU requests, from the second CU, the downlink configuration information used for the transmission over the F1 interface.

In a possible implementation, the fifth information is from the MT, and the fifth information includes identification information of the third CU and identification information of the DU of the relay node.

In this implementation, the fifth information is from the MT, and the fifth information includes the identification information of the third CU, so that the first information is sent to the third CU based on the fifth information.

In a possible implementation, the fifth information is from a source donor-CU of the DU of the relay node, and the fifth information includes the identification information of the third CU, the identification information of the DU of the relay node, and identification information for identifying the MT at the second CU.

In a possible implementation, the fifth information further indicates the second CU that DU migration of the relay node is to occur (or DU migration of the relay node is being performed, or the F1 interface is to be set up between the relay node and the third CU).

In a possible implementation, the first information includes identification information of the second CU, the identification information of the DU of the relay node, and the identification information for identifying the MT at the second CU.

In this implementation, the first information is sent to the third CU, so that the third CU requests, from the second CU based on the first information, the downlink configuration information used for the transmission over the F1 interface.

In a possible implementation, the first information indicates a binding relationship between the MT and the DU of the relay node.

In this implementation, the first information may enable the third CU to learn of the binding relationship between the MT and the DU of the relay node.

In a possible implementation, the first information further indicates the third CU to set up the F1 interface with the DU of the relay node.

In a possible implementation, the method further includes: receiving ninth information, where the ninth information indicates that the DU migration of the relay node has been complete (or the F1 interface between the DU of the relay node and the third CU has been set up). The ninth information is from the third CU or the relay node.

According to a fourth aspect, an embodiment of this application provides another communication method. The method includes: generating fifth information, where the fifth information indicates (or triggers) a second CU to send first information to a third CU, the first information indicates the third CU to request, from the second CU, downlink configuration information used for transmission over an F1 interface, there is an RRC connection between the second CU and an MT of a relay node, or the second CU is a target CU to which the MT is to be handed over, and the third CU is a target donor-CU of a DU of the relay node; and sending the fifth information to the second CU. Optionally, the first information indicates the third CU to request, from the second CU, the downlink configuration information used for the transmission over the to-be-set-up F1 interface between the third CU and the DU of the relay node. The method in the fourth aspect may be performed by a first CU or the relay node, and the first CU is a source donor-CU of the DU of the relay node. Optionally, the first information indicates the third CU to request, from the second CU, the downlink configuration information used for the transmission over the to-be-set-up F1 interface between the third CU and the DU of the relay node.

In this embodiment of this application, the fifth information is sent to the second CU, so that the second CU sends the first information to the third CU, to enable the third CU to obtain the downlink configuration information used for the transmission over the F1 interface.

In a possible implementation, sending the fifth information to the second CU includes: sending, by the source donor-CU of the DU of the relay node, the fifth information to the second CU, where the fifth information includes identification information of the third CU, identification information of the DU of the relay node, and identification information for identifying the MT at the second CU.

In a possible implementation, before generating the fifth information, the method further includes: receiving seventh information from the DU of the relay node, where the seventh information includes the identification information of the DU of the relay node.

In this implementation, the seventh information from the DU of the relay node is received, so that the identification information of the DU of the relay node can be obtained.

In a possible implementation, before generating the fifth information, the method further includes: selecting the third CU as the target donor-CU of the DU of the relay node, where an IP connection or an Xn interface exists, or an Xn interface can be set up between the third CU and the second CU.

In a possible implementation, selecting the third CU as the target donor-CU of the DU of the relay node includes: selecting, based on a network segment to which an IP address belongs, the third CU that has the IP connection to the second CU as the target donor-CU of the DU of the relay node; or selecting the third CU in a pre-configured target list as the target donor-CU of the DU of the relay node, where an IP connection or an Xn interface exists, or an Xn interface can be set up between a CU in the target list and the second CU.

In this implementation, the third CU that has the IP connection to the second CU, has the Xn interface with the second CU, or can set up the Xn interface with the second CU is selected as the target donor-CU of the DU of the relay node.

In a possible implementation, before sending the fifth information to the second CU, the method further includes: receiving eighth information from the DU of the relay node, where the eighth information is used to trigger the first CU to send the fifth information to the second CU.

In this implementation, the eighth information from the relay node is received, and sending of the fifth information to the second CU is triggered by the eighth information.

In a possible implementation, the eighth information includes identification information of the second CU, the identification information of the third CU, and the identification information of the DU of the relay node.

In a possible implementation, sending the fifth information to the second CU includes: sending, by the relay node, the fifth information to the second CU, where the fifth information includes the identification information of the third CU and the identification information of the DU of the relay node.

According to a fifth aspect, an embodiment of this application provides another communication method. The method includes: generating tenth information, where the tenth information includes identification information of a second CU, identification information of a DU of a relay node, identification information for identifying an MT of the relay node at the second CU, and downlink configuration information used for transmission of an F1 interface (not set up yet) between the DU of the relay node and a third CU, there is an RRC connection between the second CU and the MT, and the third CU is a target donor-CU of the DU of the relay node; and sending the tenth information to the third CU, where the tenth information is used by the third CU to set up the F1 interface with the DU of the relay node. The method in the fifth aspect is performed by the second CU.

In this embodiment of this application, the tenth information is sent to the third CU, so that the third CU sets up the F1 interface with the DU of the relay node.

In a possible implementation, the tenth information further indicates a binding relationship between the MT and the DU of the relay node.

In a possible implementation, before sending the tenth information to the third CU, the method further includes: receiving eleventh information, where the eleventh information indicates the second CU to send, to the third CU, the downlink configuration information used for the transmission over the F1 interface (not set up yet) between the DU of the relay node and the third CU.

In this implementation, the eleventh information is received, so that the tenth information is sent to the third CU based on the eleventh information.

In a possible implementation, the eleventh information is from the MT, and the eleventh information includes identification information of the third CU and the identification information of the DU of the relay node.

In a possible implementation, the eleventh information is from a source donor-CU of the DU of the relay node, and the eleventh information includes the identification information of the third CU, the identification information of the DU of the relay node, and the identification information for identifying the MT at the second CU.

In a possible implementation, the eleventh information further indicates the second CU that DU migration of the relay node is to occur (or DU migration of the relay node is being performed, or the F1 interface is to be set up between the relay node and the third CU).

In a possible implementation, the method further includes: receiving ninth information, where the ninth information indicates that the DU migration of the relay node has been complete (or the F1 interface between the DU of the relay node and the third CU has been set up). The ninth information is from the third CU or the relay node.

According to a sixth aspect, an embodiment of this application provides another communication method. The method includes: receiving tenth information, where the tenth information includes at least one of identification information of a second CU, identification information of a DU of a relay node, identification information for identifying an MT of the relay node at the second CU, and downlink configuration information used for transmission over an F1 interface (not set up yet) between the DU of the relay node and a third CU, there is an RRC connection between the second CU and the MT, and the third CU is a target donor-CU of the DU of the relay node; and setting up the F1 interface between the third CU and the DU of the relay node based on the tenth information. In this embodiment of this application, the F1 interface between the third CU and the DU of the relay node is set up based on the tenth information, and no additional information needs to be sent to obtain the downlink configuration information used for the transmission over the F1 interface between the DU of the relay node and the third CU, so that signaling overheads can be reduced. In a possible implementation, the tenth information further indicates a binding relationship between the MT and the DU of the relay node.

According to a seventh aspect, an embodiment of this application provides another communication method. The method includes: generating eleventh information, where the eleventh information indicates a second CU to send, to a third CU, downlink configuration information used for transmission over an F1 interface (not set up yet) between a DU of a relay node and the third CU, there is an RRC connection between the second CU and the MT, and the third CU is a target donor-CU of the DU of the relay node; and sending the eleventh information to the second CU.

In this embodiment of this application, the eleventh information is sent to the second CU, so that the second CU sends, to the third CU, the downlink configuration information used for the transmission over the F1 interface (not set up yet) between the DU of the relay node and the third CU.

In a possible implementation, sending the eleventh information to the second CU includes: sending, by the MT, the eleventh information to the second CU, where the eleventh information includes identification information of the third CU and identification information of the DU of the relay node.

In a possible implementation, sending the eleventh information to the second CU includes: sending, by a source donor-CU of the DU of the relay node, the eleventh information to the second CU, where the eleventh information includes identification information of the third CU, identification information of the DU of the relay node, and identification information for identifying the MT at the second CU.

In a possible implementation, the method further includes: receiving seventh information from the relay node, where the seventh information includes the identification information of the DU of the relay node.

In a possible implementation, the method further includes: receiving twelfth information from the relay node, where the twelfth information is used to trigger the source donor-CU (namely, a first CU) of the DU of the relay node to send the eleventh information to the second CU.

In a possible implementation, the eleventh information further indicates the second CU that DU migration of the relay node is to occur (or DU migration of the relay node is being performed, or the F1 interface is to be set up between the relay node and the third CU).

In a possible implementation, the eleventh information further indicates the second CU to trigger the third CU to initiate cross-topology traffic migration.

According to an eighth aspect, an embodiment of this application provides another communication method. The method includes: generating first information; and sending the first information to a third CU, where the first information indicates a binding relationship between a DU of a relay node and an MT of the relay node, the third CU is a target donor-CU of the DU of the relay node, there is an RRC connection between the MT and a second CU, and the second CU is different from the third CU.

In this embodiment of this application, the first information is sent to the third CU, so that the third CU learns of the binding relationship between the DU and the MT of the relay node.

In a possible implementation, the first information includes identification information of the DU of the relay node and identification information for identifying the MT at the second CU.

In a possible implementation, the method further includes: receiving request information, where the request information is used to request the binding relationship between the MT and the DU of the relay node, and the request information includes the identification information for identifying the MT at the second CU.

According to a ninth aspect, an embodiment of this application provides another communication method. The method includes: receiving first information, where the first information indicates a binding relationship between a DU of a relay node and an MT of the relay node, a third CU is a target donor-CU of the DU of the relay node, there is an RRC connection between the MT and a second CU, and the second CU is different from the third CU; and determining the binding relationship between the DU and the MT of the relay node based on the first information.

In this embodiment of this application, the binding relationship between the DU and the MT of the relay node may be determined based on the first information.

In a possible implementation, the first information includes identification information of the DU of the relay node and identification information for identifying the MT at the second CU.

In a possible implementation, the method further includes: sending request information, where the request information is used to request the binding relationship between the MT and the DU of the relay node, and the request information includes the identification information for identifying the MT at the second CU.

According to a tenth aspect, an embodiment of this application provides a communication apparatus. The communication apparatus has a function of implementing a behavior in the method embodiment in the first aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The processing unit is configured to generate first information, where the first information indicates a third CU to request, from a second CU, downlink configuration information used for transmission over an F1 interface, there is an RRC connection between the second CU and an MT of a relay node, or the second CU is a target CU to which the MT is to be handed over, and the third CU is a target donor-CU of a DU of the relay node; and the transceiver unit is configured to send the first information to the third CU.

In a possible implementation, the transceiver unit is further configured to receive second information from the relay node, where the second information includes identification information of the DU of the relay node.

In a possible implementation, the processing unit is further configured to select the third CU as the target donor-CU of the DU of the relay node, where an IP connection or an Xn interface exists, or an Xn interface can be set up between the third CU and the second CU.

In a possible implementation, the processing unit is specifically configured to: select, based on a network segment to which an IP address belongs, the third CU that has the IP connection to the second CU as the target donor-CU of the DU of the relay node; or select the third CU in a pre-configured target list as the target donor-CU of the DU of the relay node, where an IP connection or an Xn interface exists, or an Xn interface can be set up between a CU in the target list and the second CU.

In a possible implementation, the transceiver unit is further configured to receive first reference information from the second CU through an XN interface, where the first reference information indicates that the IP connection or the Xn interface exists, or the Xn interface can be set up between the second CU and the third CU; and the processing unit is further configured to determine, based on the first reference information, that the IP connection or the Xn interface exists, or the Xn interface can be set up between the second CU and the third CU.

In a possible implementation, the transceiver unit is further configured to receive second reference information from the third CU through an XN interface, where the second reference information indicates that the IP connection or the Xn interface exists, or the Xn interface can be set up between the second CU and the third CU; and the processing unit is further configured to determine, based on the second reference information, that the IP connection or the Xn interface exists, or the Xn interface can be set up between the second CU and the third CU.

For possible implementations of the communication apparatus in the tenth aspect, refer to the possible implementations of the first aspect.

For technical effects brought by the possible implementations of the tenth aspect, refer to descriptions of the technical effects of the first aspect or the possible implementations of the first aspect.

According to an eleventh aspect, an embodiment of this application provides a communication apparatus. The communication apparatus has a function of implementing a behavior in the method embodiment in the second aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The transceiver unit is configured to receive first information, where the first information indicates a third CU to request, from a second CU, downlink configuration information used for transmission over an F1 interface, there is an RRC connection between the second CU and an MT of a relay node, or the second CU is a target CU to which the MT is to be handed over, and the third CU is a target donor-CU of a DU of the relay node; and sending third information to the second CU, where the third information is used to request the downlink configuration information used for the transmission over the F1 interface.

In a possible implementation, the first information includes identification information for identifying the MT at the second CU; and the processing unit is further configured to send, to the second CU based on the identification information for identifying the MT at the second CU, information used to obtain a binding relationship between the DU of the relay node and the MT. In a possible implementation, the transceiver unit is further configured to send fourth information to the second CU, where the fourth information includes a correspondence between an IP address used for the transmission over the F1 interface and a DSCP or flow label used for the transmission over the F1 interface.

In a possible implementation, the transceiver unit is further configured to receive sixth information from the second CU, where the sixth information includes the downlink configuration information used for the transmission over the F1 interface and the identification information for identifying the MT at the second CU, for example, a UE XnAP ID of the MT at the second CU.

For possible implementations of the communication method in the eleventh aspect, refer to the possible implementations of the second aspect.

For technical effect brought by the possible implementations of the eleventh aspect, refer to descriptions of the technical effects of the second aspect or the possible implementations of the second aspect.

According to a twelfth aspect, an embodiment of this application provides a communication apparatus. The communication apparatus has a function of implementing a behavior in the method embodiment in the third aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The transceiver unit is configured to: receive fifth information, where the fifth information indicates a second CU to send first information to a third CU, the first information indicates the third CU to request, from the second CU, downlink configuration information used for transmission over an F1 interface, there is an RRC connection between the second CU and an MT of a relay node, or the second CU is a target CU to which the MT is to be handed over, and the third CU is a target donor-CU of a DU of the relay node; and send the first information to the third CU.

In a possible implementation, the transceiver unit is further configured to receive ninth information, where the ninth information indicates that DU migration of the relay node has been complete (or the F1 interface between the DU of the relay node and the third CU has been set up).

For possible implementations of the communication method in the twelfth aspect, refer to the possible implementations of the third aspect.

For technical effects brought by the possible implementations of the twelfth aspect, refer to descriptions of the technical effects of the third aspect or the possible implementations of the third aspect.

According to a thirteenth aspect, an embodiment of this application provides a communication apparatus. The communication apparatus has a function of implementing a behavior in the method embodiment in the fourth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The processing unit is configured to generate fifth information, where the fifth information indicates (or triggers) a second CU to send first information to a third CU, the first information indicates the third CU to request, from the second CU, downlink configuration information used for transmission over an F1 interface, there is an RRC connection between the second CU and an MT of a relay node, or the second CU is a target CU to which the MT is to be handed over, and the third CU is a target donor-CU of a DU of the relay node; and the transceiver unit is configured to send the fifth information to the second CU.

In a possible implementation, the transceiver unit is further configured to receive seventh information from the DU of the relay node, where the seventh information includes identification information of the DU of the relay node.

In a possible implementation, the processing unit is further configured to select the third CU as the target donor-CU of the DU of the relay node, where an IP connection or an Xn interface exists, or an Xn interface can be set up between the third CU and the second CU.

In a possible implementation, the processing unit is specifically configured to: select, based on a network segment to which an IP address belongs, the third CU that has the IP connection to the second CU as the target donor-CU of the DU of the relay node; or select the third CU in a pre-configured target list as the target donor-CU of the DU of the relay node, where an IP connection or an Xn interface exists, or an Xn interface can be set up between a CU in the target list and the second CU.

In a possible implementation, the transceiver unit is further configured to receive eighth information from the DU of the relay node, where the eighth information is used to trigger a first CU to send the fifth information to the second CU.

For possible implementations of the communication method in the thirteenth aspect, refer to the possible implementations of the fourth aspect.

For technical effects brought by the possible implementations of the thirteenth aspect, refer to descriptions of the technical effects of the fourth aspect or the possible implementations of the fourth aspect.

According to a fourteenth aspect, an embodiment of this application provides a communication apparatus. The communication apparatus has a function of implementing a behavior in the method embodiment in the fifth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The processing unit is configured to generate tenth information, where the tenth information includes at least one of identification information of a second CU, identification information of a DU of a relay node, identification information for identifying an MT of the relay node at the second CU, and downlink configuration information used for transmission over an F1 interface (not set up yet) between a DU of the relay node and a third CU, and there is an RRC connection between the second CU and the MT, and the third CU is a target donor-CU of the DU of the relay node; and the transceiver unit is configured to send the tenth information to the third CU, where the tenth information is used by the third CU to set up the F1 interface between the third CU and the DU of the relay node.

In a possible implementation, the transceiver unit is further configured to receive eleventh information, where the eleventh information indicates the second CU to send, to the third CU, the downlink configuration information used for the transmission over the F1 interface (not set up yet) between the DU of the relay node and the third CU.

In a possible implementation, the transceiver unit is further configured to receive ninth information, where the ninth information indicates that DU migration of the relay node has been complete (or the F1 interface between the DU of the relay node and the third CU has been set up).

For possible implementations of the communication method in the fourteenth aspect, refer to the possible implementations of the fifth aspect.

For technical effects brought by the possible implementations of the fourteenth aspect, refer to descriptions of the technical effects of the fifth aspect or the possible implementations of the fifth aspect.

According to a fifteenth aspect, an embodiment of this application provides a communication apparatus. The communication apparatus has a function of implementing a behavior in the method embodiment in the sixth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The transceiver unit is configured to receive tenth information, where the tenth information includes identification information of a second CU, identification information of a DU of a relay node, identification information for identifying an MT of the relay node at the second CU, and downlink configuration information used for transmission over an F1 interface (not set up yet) between the DU of the relay node and a third CU, there is an RRC connection between the second CU and the MT, and the third CU is a target donor-CU of the DU of the relay node; and the processing unit is configured to set up the F1 interface between the third CU and the DU of the relay node based on the tenth information.

For possible implementations of the communication method in the fifteenth aspect, refer to the possible implementations of the sixth aspect.

For technical effects brought by the possible implementations of the fifteenth aspect, refer to descriptions of the technical effects of the sixth aspect or the possible implementations of the sixth aspect.

According to a sixteenth aspect, an embodiment of this application provides a communication apparatus. The communication apparatus has a function of implementing a behavior in the method embodiment in the seventh aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The processing unit is configured to generate eleventh information, where the eleventh information indicates a second CU to send, to a third CU, downlink configuration information used for transmission over an F1 interface (not set up yet) between a DU of a relay node and the third CU, there is an RRC connection between the second CU and an MT, and the third CU is a target donor-CU of the DU of the relay node; and the transceiver unit is configured to send the eleventh information to the second CU.

In a possible implementation, the transceiver unit is further configured to receive seventh information from the relay node, where the seventh information includes identification information of the DU of the relay node.

In a possible implementation, the transceiver unit is further configured to receive twelfth information from the relay node, where the twelfth information is used to trigger a source donor-CU (namely, a first CU) of the DU of the relay node to send the eleventh information to the second CU.

For possible implementations of the communication method in the sixteenth aspect, refer to the possible implementations of the seventh aspect.

For technical effects brought by the possible implementations of the sixteenth aspect, refer to descriptions of the technical effects of the seventh aspect or the possible implementations of the seventh aspect.

According to a seventeenth aspect, an embodiment of this application provides a communication apparatus. The communication apparatus has a function of implementing a behavior in the method embodiment in the eighth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit, where the processing unit is configured to generate first information; and the transceiver unit is configured to send the first information to a third CU, where the first information indicates a binding relationship between a DU of a relay node and an MT of the relay node, the third CU is a target donor-CU of the DU of the relay node, there is an RRC connection between the MT and a second CU, and the second CU is different from the third CU.

In a possible implementation, the transceiver unit is further configured to receive request information, where the request information is used to request the binding relationship between the MT and the DU of the relay node, and the request information includes identification information for identifying the MT at the second CU.

For possible implementations of the communication method in the seventeenth aspect, refer to the possible implementations of the eighth aspect.

For technical effects brought by the possible implementations of the seventeenth aspect, refer to descriptions of the technical effects of the eighth aspect or the possible implementations of the eighth aspect.

According to an eighteenth aspect, an embodiment of this application provides a communication apparatus. The communication apparatus has a function of implementing a behavior in the method embodiment in the ninth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver unit and a processing unit. The transceiver unit is configured to receive first information, the first information indicates a binding relationship between a DU of a relay node and an MT of the relay node, the third CU is a target donor-CU of the DU of the relay node, there is an RRC connection between the MT and a second CU, and the second CU is different from the third CU; and the processing unit is configured to determine the binding relationship between the DU and the MT of the relay node based on the first information.

In a possible implementation, the transceiver unit is further configured to send request information, where the request information is used to request the binding relationship between the MT and the DU of the relay node, and the request information includes identification information for identifying the MT at the second CU.

For possible implementations of the communication method in the eighteenth aspect, refer to the possible implementations of the ninth aspect.

For technical effects brought by the possible implementations of the eighteenth aspect, refer to descriptions of the technical effects of the ninth aspect or the possible implementations of the ninth aspect.

According to a nineteenth aspect, an embodiment of this application provides another communication apparatus. The communication apparatus includes a processor, the processor is coupled to a memory, and the memory is configured to store a program or instructions. When the program or the instructions are executed by the processor, the communication apparatus is enabled to perform the method in any one of the first aspect to the ninth aspect.

In this embodiment of this application, in a process of performing the method, a process of sending information (or a signal) in the method may be understood as a process of outputting information based on instructions of the processor. When the information is output, the processor outputs the information to a transceiver, so that the transceiver transmits the information. After the information is output by the processor, the information may further require other processing, and then arrives at the transceiver. Similarly, when the processor receives input information, the transceiver receives the information, and inputs the information into the processor. Further, after the transceiver receives the information, other processing may need to be performed on the information before the information is input into the processor.

An operation such as sending and/or receiving related to the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor that executes the computer instructions in the memory to perform these methods. For example, the processor may be further configured to execute the program stored in the memory. When the program is executed, the communication apparatus is enabled to perform the method in any one of the first aspect or the possible implementations of the first aspect.

In a possible implementation, the memory is located outside the communication apparatus. In a possible implementation, the memory is located inside the communication apparatus.

In a possible implementation, the processor and the memory may alternatively be integrated into one component, in other words, the processor and the memory may alternatively be integrated together.

In a possible implementation, the communication apparatus further includes the transceiver. The transceiver is configured to receive or send a signal, and the like.

According to a twentieth aspect, this application provides another communication apparatus. The communication apparatus includes a processing circuit and an interface circuit, the interface circuit is configured to obtain data or output data, and the processing circuit is configured to perform the method in any one of the first aspect to the ninth aspect.

According to a twenty-first aspect, this application provides a computer-readable storage medium. The computer-readable storage medium stores a computer program, and the computer program includes program instructions. When the program instructions are executed, a computer is enabled to perform the method in any one of the first aspect to the ninth aspect.

According to a twenty-second aspect, this application provides a computer program product. The computer program product includes a computer program, and the computer program includes program instructions. When the program instructions are executed, a computer is enabled to perform the method in any one of the first aspect to the ninth aspect.

According to a twenty-third aspect, this application provides a communication system, including the communication apparatus in any one of the tenth aspect or the possible implementations of the tenth aspect, and the communication apparatus in any one of the eleventh aspect or the possible implementations of the eleventh aspect.

According to a twenty-fourth aspect, this application provides a communication system, including the communication apparatus in any one of the eleventh aspect or the possible implementations of the eleventh aspect, the communication apparatus in any one of the twelfth aspect or the possible implementations of the twelfth aspect, and the communication apparatus in any one of the thirteenth aspect or the possible implementations of the thirteenth aspect.

According to a twenty-fifth aspect, this application provides a communication system, including the communication apparatus in any one of the fourteenth aspect or the possible implementations of the fourteenth aspect, the communication apparatus in any one of the fifteenth aspect or the possible implementations of the fifteenth aspect, and the communication apparatus in any one of the sixteenth aspect or the possible implementations of the sixteenth aspect.

According to a twenty-sixth aspect, this application provides a communication system, including the communication apparatus in any one of the seventeenth aspect or the possible implementations of the seventeenth aspect, and the communication apparatus in any one of the eighteenth aspect or the possible implementations of the eighteenth aspect.

According to a twenty-seventh aspect, this application provides a chip, including a processor and a communication interface. The processor reads, through the communication interface, instructions stored in a memory, to perform the method in any one of the first aspect to the ninth aspect.

### BRIEF DESCRIPTION OF DRAWINGS

To describe the technical solutions in embodiments of this application or in the background more clearly, the following describes the accompanying drawings for describing embodiments of this application or the background.
FIG. 1 is a diagram of an architecture of a communication system to which an embodiment of this application is applicable;
FIG. 2 shows an example of an IAB network including a plurality of UEs and a plurality of IAB-nodes;
FIG. 3 is a diagram of an IAB network architecture;
FIG. 4 is a diagram of partial migration;
FIG. 5 is a diagram of full migration;
FIG. 6 shows an example of a continuous partial migration (no DU migration) scenario;
FIG. 7 shows an example of a scenario of DU migration in continuous partial migration according to an embodiment of this application;
FIG. 8 is an example of a scenario in which a DU is migrated and an MT is not migrated according to an embodiment of this application;
FIG. 9 is an interaction flowchart of a communication method according to an embodiment of this application;
FIG. 10 is an interaction flowchart of another communication method according to an embodiment of this application;
FIG. 11 is an interaction flowchart of another communication method according to an embodiment of this application;
FIG. 12 is an interaction flowchart of another communication method according to an embodiment of this application;
FIG. 13 is an interaction flowchart of another communication method according to an embodiment of this application;
FIG. 14 is an interaction flowchart of another communication method according to an embodiment of this application;
FIG. 15 is an interaction flowchart of another communication method according to an embodiment of this application;
FIG. 16 is an interaction flowchart of another communication method according to an embodiment of this application;
FIG. 17A is an example of another scenario in which a DU is migrated and an MT is not migrated according to an embodiment of this application;
FIG. 17B is an example of another scenario in which a DU is migrated and an MT is not migrated according to an embodiment of this application;
FIG. 18 is an interaction flowchart of another communication method according to an embodiment of this application;
FIG. 19 is an interaction flowchart of another communication method according to an embodiment of this application;
FIG. 20 is an interaction flowchart of another communication method according to an embodiment of this application;
FIG. 21 is an interaction flowchart of another communication method according to an embodiment of this application;
FIG. 22 is a possible example block diagram of a communication apparatus in an embodiment of this application; and
FIG. 23 is a diagram of a structure of a network device 2300 according to an embodiment of this application.

### DESCRIPTION OF EMBODIMENTS

The terms "first", "second", and the like in the specification, claims, and accompanying drawings of this application are merely used to distinguish between different objects, and are not used to describe a specific order. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. In addition, terms "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"An embodiment" mentioned in the specification indicates that a particular characteristic, structure, or feature described with reference to this embodiment may be included in at least one embodiment of this application. The phrase shown in various locations in the specification may not necessarily refer to a same embodiment, and is not an independent or optional embodiment exclusive from another embodiment. A person skilled in the art may explicitly and implicitly understand that the embodiment described in this specification may be combined with another embodiment.

The terms used in the following embodiments of this application are merely intended to describe specific embodiments, but are not intended to limit this application. The terms "one", "a", "the", "the foregoing", "this", and "the one" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more. In text descriptions of this application, a character "/" usually indicates an "or" relationship between associated objects. The term "at least one" used in this application means one or more.

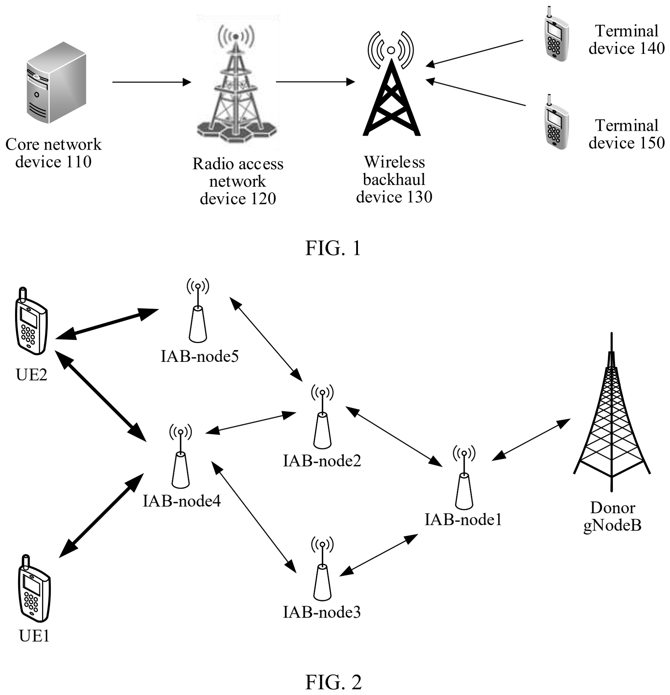

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) based on (or according to) only A, and B may alternatively be determined (or generated) based on (or according to) A and/or other information. FIG. 1 is a diagram of an architecture of a communication system to which an embodiment of this application is applicable. As shown in FIG. 1, the communication system includes a core network device 110, a radio access network device 120, a wireless backhaul device 130, and at least one terminal device (a terminal device 140 and a terminal device 150 are used as examples for description in FIG. 1). The terminal device is connected to the wireless backhaul device in a wireless manner, and is connected to the radio access network device through one or more wireless backhaul devices. In addition, some terminal devices may also be directly connected to the radio access network device in a wireless manner. The radio access network device is connected to the core network device in a wireless manner or a wired manner. The core network device and the radio access network device may be different physical devices that are independent of each other, functions of the core network device and logical functions of the radio access network device may be integrated into a same physical device, or a part of functions of the core network device and a part of functions of the radio access network device may be integrated into one physical device. This is not limited in this application. The terminal device may be located at a fixed location, or may be mobile. It should be understood that the mobile communication system shown in FIG. 1 is merely a diagram. The communication system may further include another network device, for example, may further include a wireless relay device or a wireless backhaul device, which is not shown in FIG. 1. Quantities of core network devices, radio access network devices, wireless backhaul devices, and terminal devices included in the mobile communication system are not limited in embodiments of this application.

The radio access network device is an access device that is used by the terminal device to access the mobile communication system in a wireless manner. The radio access network device may be a NodeB (NodeB), an evolved NodeB eNodeB, a gNodeB in a 5G mobile communication system, a base station in a future mobile communication system, an access node in a Wi-Fi system, or the like. A specific technology and a specific device form that are used for the radio access network device are not limited in embodiments of this application. The terminal device may also be referred to as a terminal (terminal), a UE, a mobile station (mobile station, MS), an MT, or the like.

The terminal device may be a mobile phone (mobile phone), a tablet computer (Pad), a computer having a wireless transceiver function, a virtual reality (virtual reality, VR) terminal device, an augmented reality (augmented reality, AR) terminal device, a cellular phone (cellular phone), a smartphone (smartphone), a wireless data card, a personal digital assistant (personal digital assistant, PDA), a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a machine type communication (machine type communication, MTC) terminal, a wearable device, a vehicle-mounted terminal device, an uncrewed aerial vehicle, or the like.

The wireless backhaul device may provide a backhaul service for a child node of the wireless backhaul device. Specifically, the wireless backhaul device may be a relay node in a long term evolution (long term evolution, LTE) system, an IAB-node in a 5G system, or another device that can provide a wireless relay function. The radio access network device and the terminal device may be deployed on land, where the deployment includes indoor or outdoor, and handheld or vehicle-mounted deployment; may be deployed on water; or may be deployed on an airplane, a balloon, and an artificial satellite in air. Application scenarios of the radio access network device and the terminal device are not limited in embodiments of this application.

Communication between the radio access network device and the terminal device and communication between terminal devices may be performed by using a licensed spectrum (licensed spectrum), may be performed by using an unlicensed spectrum (unlicensed spectrum), or may be performed by using both a licensed spectrum and an unlicensed spectrum. The communication between the radio access network device and the terminal device and the communication between the terminal devices may be performed over a spectrum below 6 gigahertz (gigahertz, GHz), over a spectrum above 6 GHz, or over both a spectrum below 6 GHz and a spectrum above 6 GHz. Spectrum resources used between the radio access network device and the terminal device are not limited embodiments of this application.

The foregoing network elements may be network elements implemented on dedicated hardware, software instances running on dedicated hardware, or instances of virtualization functions on an appropriate platform. In addition, embodiments of this application are further applicable to another future-oriented communication technology. A network architecture and a service scenario described in this application are intended to describe the technical solutions in this application more clearly, and do not constitute a limitation on the technical solutions provided in this application. A person of ordinary skill in the art may know that: With evolution of the network architecture and emergence of a new service scenario, the technical solutions provided in this application are also applicable to a similar technical problem.

For ease of understanding embodiments of this application, the following first briefly describes terms and technical features in embodiments of this application.
(1) IAB network: Considering small coverage of a high frequency band, to ensure network coverage performance, network coverage is provided in some remote areas, but optical fiber deployment is difficult and costly. Therefore, a flexible and convenient access and backhaul solution needs to be designed. An IAB technology emerges. A wireless transmission solution is used for both an access link (access link) and a backhaul link (backhaul link) of the IAB technology, so that optical fiber deployment is avoided and device costs are reduced.

In the IAB network, a relay node, or referred to as an IAB-node (IAB-node), may provide a wireless access service for a UE. Transmission of service data of the UE is performed by the IAB-node connected to an IAB-donor node (IAB-donor) over a wireless backhaul link. The IAB-node may be referred to as an mIAB node (mobile IAB). In the following descriptions, mIAB refers to an mIAB-node, mIAB-MT refers to an MT of an IAB-node, mIAB-DU refers to a DU of an IAB-node, MT is short for an MT of an IAB-node, and DU is short for a DU of an IAB-node. The IAB-node may establish a wireless backhaul link to one or more upper-level nodes, and access a core network through the upper-level node. The upper-level node may control (for example, perform data scheduling, timing modulation, and power control on) the relay node by using a plurality of types of signaling. In addition, the relay node may set up an access link to one or more lower-level nodes, and provide an access service for the one or more lower-level nodes. The upper-level node of the relay node may be a base station, or may be another relay node. The lower-level node of the relay node may be a terminal, or may be another relay node. In some cases, an upper-level node of an IAB-node may also be referred to as an upstream node or a parent node of the IAB-node, and an upper-level node of the IAB-node may also be referred to as a downstream node or a child node of the IAB-node.

Multi-hop networking may be used in the IAB network. In consideration of a service transmission reliability requirement, the IAB-node may support dual connectivity (dual connectivity, DC) or multi-connectivity (multi-connectivity), to cope with a possible exception (for example, radio link outage or blockage (blockage) and load fluctuation) on the backhaul link, to enhance transmission reliability assurance. Therefore, the IAB network may support multi-hop networking and multi-connectivity networking, and there may be a plurality of routing paths between a terminal device and a donor gNodeB. On one path, there is a determined hierarchical relationship between IAB-nodes and between an IAB-node and a donor gNodeB serving the IAB-node. Each IAB-node considers a node providing a backhaul service for the IAB-node as a parent node. Correspondingly, each IAB-node may be considered as a child node of the parent node.

The IAB-donor node (IAB-donor) may be an access network element having a complete base station function, for example, a donor gNodeB DgNB, or may be an access network element in which a central unit (central unit, CU) and a DU are separated. The IAB-donor node is connected to a core network (for example, connected to a 5G core network) network element that serves the terminal device, and provides a wireless backhaul function for the IAB-node. For ease of description, the central unit of the IAB-donor node may be referred to as a donor-CU or an IAB-donor-CU for short, and the distributed unit of the IAB-donor node may be referred to as a donor-DU or an IAB-donor-DU for short. The donor-CU may alternatively be in a form in which a control plane (control plane, CP) and a user plane (user plane, UP) are separated. For example, the CU may include one CU-CP and one (or more) CU-UPs.

In the IAB network, one or more IAB-nodes may be included on one transmission path between the UE and the IAB-donor. Each IAB-node needs to maintain a wireless backhaul link oriented to a parent node and a radio link to a child node. If the child node of the IAB-node is a terminal device, there is a wireless access link between the IAB-node and the child node (namely, the terminal device). If the child node of the IAB-node is the another IAB-node, there is a wireless backhaul link between the IAB-node and the child node (namely, the another IAB-node). FIG. 2 shows an example of an IAB network including a plurality of UEs and a plurality of IAB-nodes. In FIG. 2, an example in which two UEs and five IAB-nodes are included is used. The two UEs are respectively a UE1 and a UE2, and the five IAB-nodes are respectively an IAB-node1 to an IAB-node5. It should be understood that, in FIG. 2, a thick line indicates an access link, and a thin line indicates a backhaul link. Refer to FIG. 2. In a path "UE1->IAB-node4->IAB-node3->IAB-node1->IAB-donor", the UE1 accesses the IAB-node4 through a wireless access link, the IAB-node4 is connected to the IAB-node3 through a wireless backhaul link, the IAB-node3 is connected to the IAB-node1 through a wireless backhaul link, and the IAB-node1 is connected to the IAB-donor through a wireless backhaul link. It should be understood that an IAB networking scenario shown in FIG. 2 is merely an example, and there are more other possibilities in the IAB network that supports multi-hop networking and multi-connectivity networking. This is not listed one by one herein.

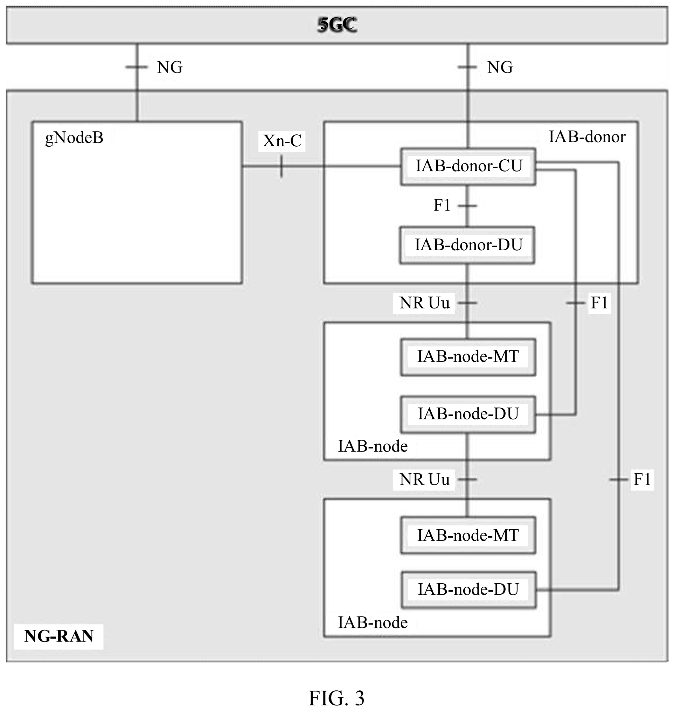

An IAB-node-DU (briefly referred to as an mIAB-DU below) is logically connected to an IAB-donor-CU (briefly referred to as a CU below) through an F1 interface. FIG. 3 is a diagram of an IAB network architecture. An F1 connection in FIG. 3 is not a physical direct connection, but a logical connection. Actually, an F1 connection between an mIAB-DU and a CU is physically implemented through an NR Uu interface between an IAB-node MT of each hop and a parent node DU. However, because the mIAB-DU can finally communicate with the CU, it may be considered that there is an F1 interface logically. The F1 interface may also be referred to as an F1* interface. A name of the interface is not limited in embodiments of this application. In addition, for example, the interface is referred to as the F1 interface in this specification. The IAB-donor-CU is connected to a 5G core network (5G core network, 5GC/5GCN) through an NG interface. There is an Xn-C interface between the IAB-donor-CU and a gNodeB.

### (2) Partial migration (partial migration) and full migration (full migration)

In discussion of 3GPP Release-17 (Release-17), inter-CU migration of an IAB-node is implemented into two manners: full migration and partial migration. The full migration is further implemented in three manners: gradual top-down (gradual top-down) migration, gradual bottom-up (gradual bottom-up) migration, and full nested (full nested) migration. In the partial migration, inter-CU handover is performed on an MT of the IAB-node, but a DU of the IAB-node still maintains an F1 connection to a source CU. However, in the full migration, the DU of the IAB-node needs to set up an F1 connection to a candidate target CU. Rel-17 is mainly oriented to migration in an IAB-node with an objective of load balancing. Therefore, the partial migration may be used, and only MT handover is performed, so that an F1 interface is switched to another path for transmission, but an anchor of the F1 interface is not changed. However, Rel-18 is mainly oriented to migration caused by movement of an IAB-node. When a movement range of the IAB-node is large, it is inappropriate to still maintain an F1 connection to a source CU, and an anchor of the F1 connection also needs to be changed to a candidate target CU. Therefore, the full migration is a mandatory feature of mobile IAB in Rel-18. The following briefly describes a current discussion status of the partial migration and the full migration.

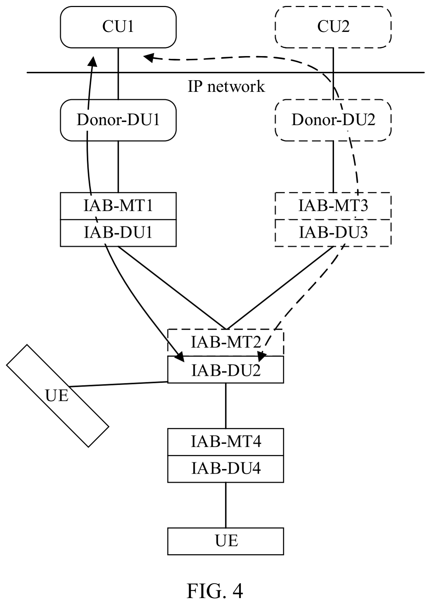

An IAB-node on which migration is performed is referred to as a boundary node (boundary node). FIG. 4 is a diagram of partial migration. Refer to FIG. 4. An IAB-node2 is a boundary node. Before partial migration is performed on the IAB-node2, there is an RRC connection between an IAB-MT2 and a CU1, and there is an F1 interface between an IAB-DU2 and the CU1. The IAB-node2 communicates with an IAB-donor through a source path (passing through an IAB-node1 including an IAB-MT1 and an IAB-DU1). Refer to a solid line with arrows. During the partial migration of the IAB-node2, inter-CU cell handover is performed on the IAB-MT2, and an RRC connection to a CU2 is established. However, to avoid or reduce introducing an F1 interface re-setup process, the IAB-DU2 still maintains the F1 interface with the CU1, and an F1 interface is not set up between the IAB-DU2 and the CU2. Therefore, a communication path between the CU1 and the IAB-DU2 becomes cross-topology: CU1↔Donor-DU2↔IAB-MT3↔IAB-DU3↔IAB-MT2↔IAB-DU2. Refer to a dashed line with arrows. In FIG. 4, the CU1 and the CU2 are respectively referred to as an F1-terminating CU and a non-F1-terminating CU. It should be noted that data does not pass through the CU2 when transmission of the data is performed on the path, and the CU1 and the donor-DU2 directly communicate with each other through an IP network. In the partial migration, core interaction signaling is an XN message: an IAB TRANSPORT MANAGEMENT REQUEST/RESPONSE message between the CU1 and the CU2. For details, refer to Section 9.4.2 and Section 9.4.3 of the standard TS 38.423 V17.2.0. The CU1 requests, by using the IAB TRANSPORT MANAGEMENT REQUEST message, the CU2 to help the CU1 establish cross-topology transmission of traffic, where the message carries an IP address and quality of service (quality of service, QoS) information of the traffic. After establishing the cross-topology transmission of the traffic, the CU2 returns, to the CU1, backhaul (backhaul) link information (in a topology in dashed boxes of the CU2) of the MT of the boundary node by using the IAB TRANSPORT MANAGEMENT RESPONSE message, and the CU1 configures a cross-topology BAP rule for the boundary node by using an F1AP based on the backhaul information of the MT of the boundary node. An IAB TRANSPORT MANAGEMENT REQUEST/RESPONSE is an XN message associated (associated) by a UE, and is associated with (associated to) the MT of the boundary node. Therefore, both the two messages need to carry a UE XnAP ID of the MT of the boundary node at the CU1 and a UE XnAP ID of the MT of the boundary node at the CU2, and the UE XnAP IDs identify the MT.

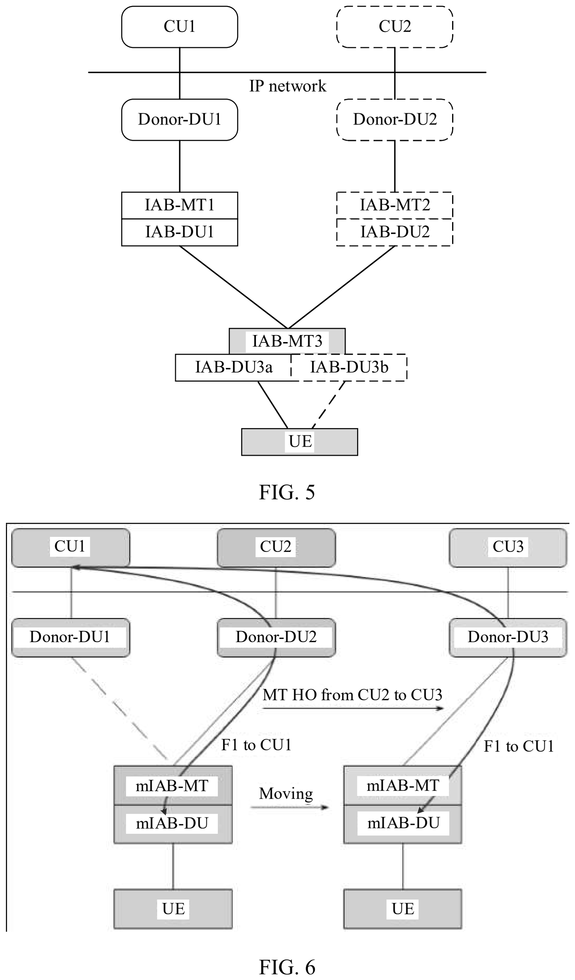

FIG. 5 is a diagram of full migration. Refer to FIG. 5. An IAB-node3 is a boundary node. In the full migration, an F1 interface between an IAB-DU3 and a CU1 needs to be migrated to a CU2. Because a protocol does not support coexistence of F1 interfaces between one DU and two CUs, in an existing implementation solution, the IAB-DU3 is extended to two logical DUs, namely, an IAB-DU3a (which may be referred to as a DU3a for short) and an IAB-DU3b (namely, a new logical DU). The IAB-DU3a always maintains an F1 interface with the CU1, and the IAB-DU3b (which may be referred to as a DU3b for short) is configured to set up a new F1 interface with the CU2. The DU3a and the DU3b may be considered as two DUs, and each have one F1 interface. A UE needs to perform one time of handover from a cell served by the IAB-DU3a to a cell served by the IAB-DU3b. In the three implementations of the full migration:
First several steps of the gradual top-down migration are similar to those of the partial migration. First, an IAB-MT3 (which may be referred to as an MT3 for short) is handed over based on a partial migration process, and a cross-topology F1-C and a cross-topology F1-U between the DU3a and the CU1 are set up. When the CU2 helps set up the cross-topology F1-C and the cross-topology F1-U between the DU3a and the CU1, the CU2 also sets up an F1-C and an F1-U between the DU3b and the CU2, and then hands over the UE to the DU3b. The UE may directly communicate with the CU2 on a target path (target path). The target path refers to CU2↔Donor-DU2↔IAB-MT2↔IAB-DU2↔IAB-MT3↔IAB-DU3b↔UE.

In the gradual bottom-up migration, a cross-topology F1-C and a cross-topology F1-U between the DU3b and the CU2 are first set up, so that the UE can be handed over to the DU3b, and control plane and user plane data transmission between the DU3b and the CU2 through a topology 1 is set up. After all UEs are successfully handed over, a handover command is sent to the MT3 or a handover command of the MT3 is validated, and then the F1-C/U is set up on a target path, so that traffic of the UE can be migrated to the target path. The topology 1 refers to CU2↔Donor-DUl↔IAB-MT1↔IAB-DUl↔IAB-MT3↔IAB-DU3b. To establish the control plane and user plane data transmission between the DU3b and the CU2 through the topology 1, backhaul link resources (BH RLC CH) need to be established on the DU3b and a donor-DU1, and an intermediate hop node (if any) between the DU3b and the donor-DU1, and a BAP layer needs to be configured. In this way, these related nodes can have corresponding resources for transmission of control plane and user plane data, and a BAP layer of each related node knows how to map a data packet to a resource.

A case of the full nested migration is similar to that of the gradual bottom-up migration. First, a cross-topology F1-C between the DU3b and the CU2 is set up (only the cross-topology F1-C is set up, so that the CU2 is allowed to hand over the UE to the DU3b when the CU2 makes a handover decision, but a cross-topology F1-U is not set up, and cross-topology data transmission is not performed), so that the UE can be allowed to be handed over to the DU3b. After a handover command is sent to all UEs, a handover command is immediately sent to the MT3 or a handover command of the MT3 is validated. Then, the F1-C/U is directly set up on a target path, so that traffic of the UE can be migrated to the target path.

### (3) DU migration in continuous partial migration

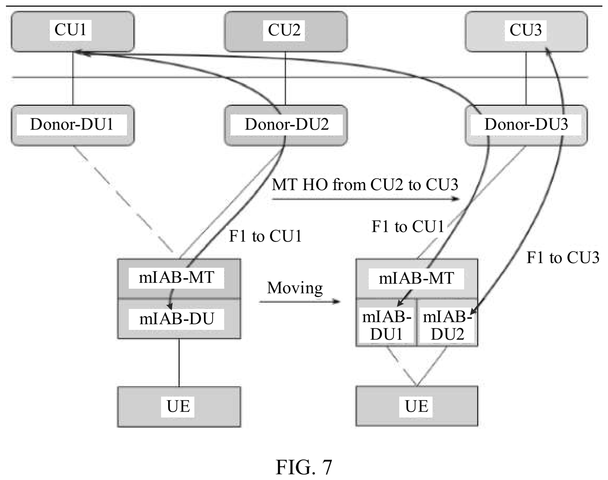

An essential difference between the full migration and the partial migration lies in whether the DU migration needs to be performed (in fact, a new logical DU is generated and then an F1 interface is set up with a target (target) CU, which may also be usually described as the "DU migration" from a macro perspective of an IAB-node). In a Rel-18 mobile IAB project initiation document, the full migration is a mandatory feature. However, this does not mean that the full migration needs to be performed for each time of migration of the IAB-node. In discussion in previous several meetings of Rel-18, a mainstream view is to use continuous partial migration as a baseline, and perform DU migration when the DU migration needs to be performed. FIG. 6 shows an example of a continuous partial migration (no DU migration) scenario. As shown in FIG. 6, an mIAB (mobile IAB)-MT is handed over from a topology of a CU1 to a topology of a CU2, and then is handed over from the topology of the CU2 to a topology of a CU3. The mIAB-DU always maintains an F1 connection to the CU1. According to a conclusion of an RAN3 #117b e-meeting, a CU (namely, the CU1) of an F1 anchor of an mIAB-DU determines whether DU migration needs to be performed. FIG. 7 shows an example of a scenario of DU migration in continuous partial migration according to an embodiment of this application. FIG. 7 shows a case in which a CU1 determines to perform DU migration when an mIAB-MT is migrated from a topology of a CU2 to a topology of a CU3. Similar to the full migration, an mIAB-node needs to generate a new logical DU (mIAB-DU2), set up an F1 interface with the CU3, and then hand over a UE from a cell served by an mIAB-DU1 to a cell served by the mIAB-DU2. In FIG. 6 and FIG. 7, the mIAB-MT is directly connected to a donor-DU, but this is merely an example. The mIAB-MT may alternatively be connected to another fixed mIAB-DU, and reach the donor-DU through a plurality of hops. This is not limited in embodiments of this application.

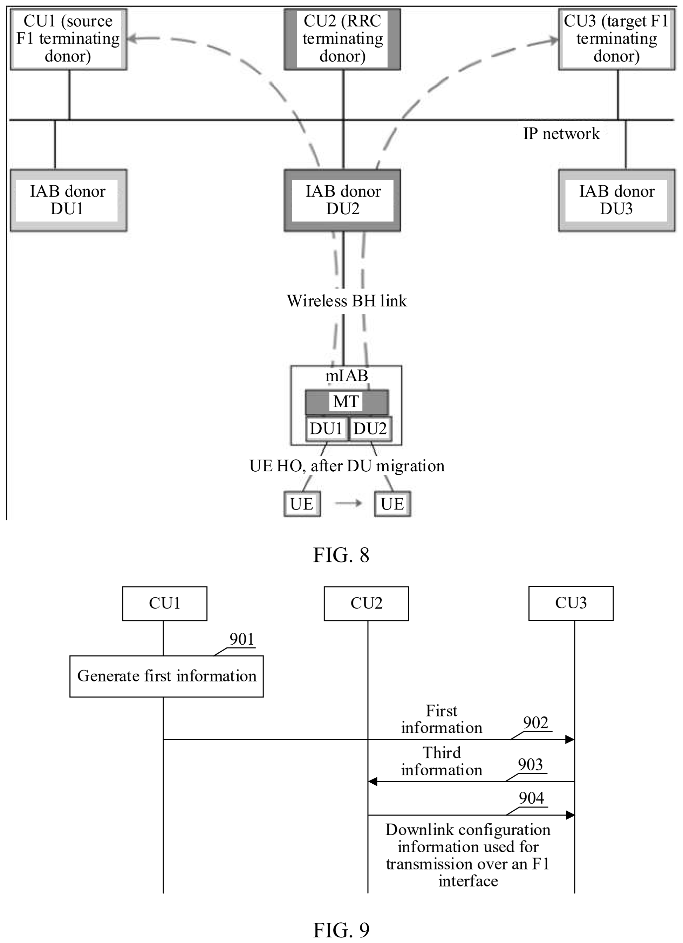

In the RAN3 meeting, many companies consider that migration of an mIAB-MT (MT for short) and mIAB-DU (DU for short) can be decoupled. FIG. 8 is an example of a scenario in which a DU is migrated and an MT is not migrated according to an embodiment of this application. In FIG. 8, a DU2 represents a new logical DU generated by an mIAB-node, an F1 interface is set up between the DU2 and a CU3 (in other words, the DU of the mIAB-node is migrated to the CU3), and there is an RRC connection between an MT and the CU2. As shown in FIG. 8, the DU of the mIAB-node is migrated to the CU3, the mIAB-MT is not migrated, and the migration of the DU does not depend on migration of the MT. A scenario in which an MT is migrated but a DU is not migrated is partial migration. There is no in-depth discussion on a standard for a scenario in which a DU is migrated but an MT is not migrated. A reason provided by a company that supports DU migration without depending on MT migration is mainly as follows: Due to mobility, an MT may frequently change a CU (for example, a CU of a pico-cell), but an anchor CU of a DU is not recommended to be frequently changed, and the anchor CU of the DU is more likely to access a CU with a large control range, instead of selecting a CU of a small cell with the MT. Therefore, the DU migration and the MT migration can be decoupled. For example, a CU1 and a CU3 are CUs of a macro base station, and a CU2 is a CU of a small cell located at a boundary between control ranges of the CU1 and the CU3. An mIAB is moving from the control range of the CU1 to the control range of the CU3. When an MT is located on the CU2, the CU1 considers that the DU needs to be migrated to the CU3 first, to avoid an increase in a transmission latency caused by an excessively long distance between the DU and the CU1 after the MT continues to be migrated.

### (4) Downlink configuration information used for transmission over an F1 interface

The downlink configuration information used for the transmission over the F1 interface may include a DSCP/flow label required by a CU for transmitting a downlink F1 interface message (an F1 interface message from the CU to a DU). When the CU transmits a downlink F1 interface message, the CU needs to know a DSCP/flow label to be added to the F1 interface message, to ensure quality of service (quality of service, QoS) of the transmission of the F1 interface message. After receiving an F1 SETUP REQUEST message, the CU returns the F1 SETUP RESPONSE message to an mIAB-DU and adds the DSCP/flow label to an IP header of the F1 SETUP RESPONSE message. In addition, in each subsequent F1 interface message exchange process, in a downlink direction, the CU adds a DSCP/flow label to an IP header of an F1 interface message. After a handshake of the F1 SETUP REQUEST and the F1 SETUP RESPONSE is performed between the mIAB-DU and the CU, the F1 interface is set up, and the CU can send an F1 control message to the mIAB-DU. In subsequent time, the CU may send more BAP configuration information to the mIAB-DU by using the F1 control message, to indicate an IAB-node to set up more backhaul link (Backhaul link) and backhaul radio link control channel (backhaul RLC channel) resources (at the beginning, there is only one default (default) RLC channel, used to transmit a 1^{st} F1 SETUP REQUEST), for transmitting more other F1-C messages and F1-U user plane data.

Currently, only technical details in a scenario in which an MT also needs to be migrated before or after a DU is migrated and the DU and the MT are migrated to a same target CU are considered. In this scenario, downlink configuration information (for example, a DSCP/flow label) required for transmitting a downlink F1 interface message is allocated by the target CU.

Currently, a solution in which a DU is migrated and an MT is not migrated, namely, a solution in which a target donor-CU of a DU is different from a target donor-CU of an MT, is being researched in the industry. When a DU is migrated and an MT is not migrated, in the scenario shown in FIG. 8, because a new F1 connection between the mIAB-DU2 and the CU3 needs to pass through a topology of the CU2, downlink configuration information required for transmitting a downlink F1 interface message should be allocated by the CU2. However, when the MT is not migrated, how to enable the CU3 serving as a target donor-CU (which may also be referred to as a target F1 anchor CU, namely, a target F1-terminating CU) to obtain the downlink configuration information allocated by the CU2 is not considered in an existing DU migration solution. Therefore, when a DU is migrated and an MT is not migrated, how a target donor-CU of the DU learns of downlink configuration information used for transmission over a target F1 interface needs to be studied.

According to the communication solution provided in embodiments of this application, a problem of how a target donor-CU of a DU learns, when the DU is migrated and an MT is not migrated, of downlink configuration information used for transmission over a target F1 interface (namely, an F1 interface between the target donor-CU and the DU) can be resolved. The communication solution provided in embodiments of this application is applicable to a scenario in which a DU is migrated and an MT is not migrated, and a scenario in which a DU and an MT are migrated to different target CUs, as shown in the scenario in FIG. 8.

The following describes, with reference to the accompanying drawings, the communication solution provided in embodiments of this application.

FIG. 9 is an interaction flowchart of a communication method according to an embodiment of this application. As shown in FIG. 9, the method includes the following steps.

901: A first CU generates first information.

The first information indicates a third CU to request, from a second CU, downlink configuration information used for transmission over an F1 interface. Optionally, the first information indicates the third CU to request, from the second CU, the downlink configuration information used for the transmission over the to-be-set-up F1 interface between the third CU and a DU of a relay node. The downlink configuration information used for the transmission over the F1 interface includes a DSCP and/or flow label (flow label) used for the transmission over the F1 interface. In this application, there is an RRC connection between the second CU and an MT of the relay node. Alternatively, the second CU is a target CU to which the MT is to be handed over. The third CU is a target donor-CU of the DU of the relay node, and the first CU is a source donor-CU of the DU of the relay node. In other words, there is an F1 interface between the DU of the relay node and the first CU.

In a possible implementation, the first information includes identification information of the second CU, identification information of the DU of the relay node, and identification information for identifying the MT at the second CU. The identification information of the second CU may include a gNB ID and an IP address of the second CU. The identification information of the DU of the relay node may include at least one of the following: a gNB-DU ID and/or an IP address of the DU of the relay node. The identification information for identifying the MT at the second CU may include a UE XnAP ID of the MT at the second CU. The DU of the relay node may be a new logical DU generated by the relay node, namely, a logical DU generated for DU migration. The first information may further include a UE XnAP ID of the MT at the first CU. In this implementation, the first information is sent to the third CU, so that the third CU requests, from the second CU based on the first information, the downlink configuration information used for the transmission over the F1 interface.

902: The first CU sends the first information to the third CU.

Correspondingly, the third CU receives the first information from the first CU. The first information may be carried in a new message, for example, an IAB Transport Migration Procedure Request message. A name of the message carrying the first information is not limited.

In a possible implementation, the first information further indicates a binding relationship between the MT (the UE XnAP ID of the MT at the second CU may be used) and the DU of the relay node (the gNB-DU ID of the DU may be used). In this implementation, the first information may further enable the third CU to learn of the binding relationship between the MT and the DU of the relay node.

In a possible implementation, the first information indicates the third CU to send a cross-topology traffic migration request to the second CU (for example, send an IAB Transport Migration Management Request message to the second CU), to request, from the second CU, the downlink configuration information used for the transmission over the F1 interface.

In a possible implementation, the second CU is the target CU to which the MT is to be handed over, and the first information further indicates the third CU to migrate traffic of the F1 interface with the DU of the relay node to a topology of the second CU. The first information indicates the third CU to request, from the second CU, downlink configuration information used for the F1 interface traffic migration.

903: The third CU sends third information to the second CU.

Correspondingly, the second CU receives the third information from the third CU.

The third information is used to request the downlink configuration information used for the transmission over the F1 interface. Optionally, the third information is used to request the downlink configuration information used for the transmission over the F1 interface between the third CU and the DU of the relay node. The third information may be carried in the cross-topology traffic migration request (IAB Transport Migration Management Request) message. An example of step 903 is as follows: The third CU initiates the cross-topology traffic migration request to the second CU (for example, sends the IAB Transport Migration Management Request message to the second CU), where the IAB Transport Migration Management Request message is used to request the downlink configuration information used for the transmission over the F1 interface between the third CU and the DU of the relay node.

904: The second CU sends, to the third CU, the downlink configuration information used for the transmission over the F1 interface.

Optionally, the second CU sends, to the third CU, the downlink configuration information used for the transmission over the F1 interface between the third CU and the DU of the relay node. An example of step 904 is as follows: The second CU returns a cross-topology traffic migration request response to the third CU (for example, sends an IAB Transport Migration Management Response message to the third CU), where the response carries a DSCP/flow label that the second CU expects the third CU to add to an IP header of a downlink F1 interface message (or referred to as an F1 downlink data packet). For example, if in the first information, an identifier of the DU of the relay node uses the IP address of the DU, in this step, the second CU returns, to the third CU, a mapping relationship that is between the IP address of the DU and the DSCP/flow label and that is carried in the first information. If in the first information, an identifier of the DU of the relay node uses the gNB-DU ID of the DU, in this step, the second CU returns, to the third CU, a mapping relationship between an IP address allocated by the second CU to the DU and the DSCP/flow label.

In this embodiment of this application, the first information is sent to the third CU, where the first information indicates the third CU to request, from the second CU, the downlink configuration information used for the transmission over the F1 interface, so that the third CU obtains the downlink configuration information used for the transmission over the F1 interface, and therefore the F1 interface can be set up.

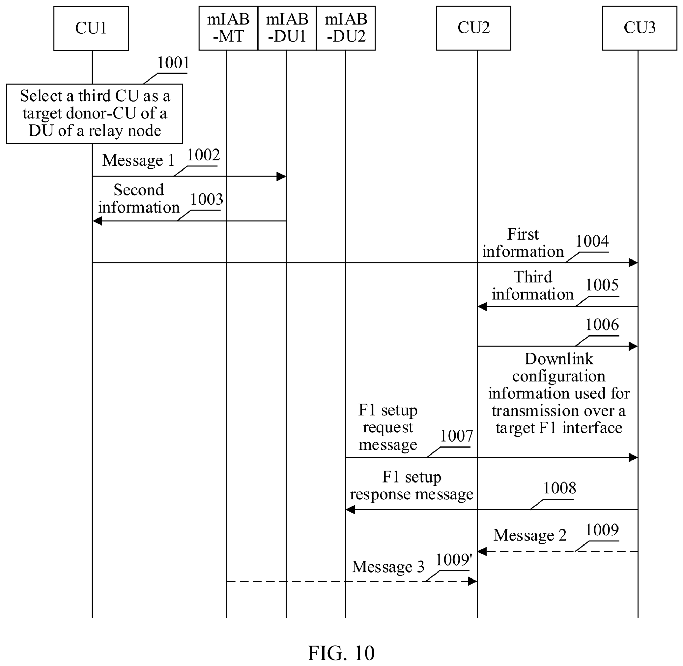

FIG. 10 is an interaction flowchart of another communication method according to an embodiment of this application. A method procedure in FIG. 10 is a possible implementation of the method described in FIG. 9. In this implementation, a first CU selects a third CU as a target donor-CU of a DU of a relay node, to ensure that traffic of a to-be-set-up F1 interface between the DU of the relay node and the third CU can be transmitted through a topology of the second CU. In the accompanying drawings of this application, a CU1 represents the first CU, a CU2 represents the second CU, a CU3 represents the third CU, mIAB-MT represents an MT of the relay node, mIAB-DU1 represents the DU of the relay node, and mIAB-DU2 represents a new logical DU generated by the relay node. As shown in FIG. 10, the method includes the following steps.

1001: The first CU selects the third CU as the target donor-CU of the DU of the relay node.

An IP connection or an Xn interface exists, or an Xn interface can be set up between the third CU and the second CU. The traffic of the F1 interface between the third CU and the DU of the relay node needs to be transmitted through the topology of the second CU, where transmission between a donor-DU of the second CU and the third CU is performed through an IP network. Therefore, it needs to be ensured that an IP connection between the donor-DU of the second CU and the third CU exists (which may be referred to as "the donor-DU of the second CU and the third CU are IP reachable between each other"). When selecting the target donor-CU of the DU, the first CU needs to consider IP reachability between the target donor-CU of the DU and the second CU. Alternatively, a determining condition that is stricter than IP reachable may be used: The XN interface exists or can be set up.

A possible implementation of step 1001 is as follows: The third CU that has the IP connection to the second CU is selected as the target donor-CU of the DU (namely, the new logical DU) of the relay node based on a network segment to which an IP address belongs. In this implementation, the third CU that has the IP connection to the second CU, has the Xn interface with the second CU, or can set up the Xn interface with the second CU is selected as the target donor-CU of the DU of the relay node.

A possible implementation of step 1001 is as follows: The third CU in a pre-configured target list is selected as the target donor-CU of the DU of the relay node, where an IP connection or an Xn interface exists, or an Xn interface can be set up between a CU in the target list and the second CU. In this implementation, the target donor-CU of the DU of the relay node is selected from the target list, to ensure that the IP connection or the Xn interface exists, or the Xn interface can be set up between the target donor-CU selected for the DU of the relay node and the second CU.

In a possible implementation, before performing step 1001, the first CU performs the following operation: receiving first reference information from the second CU through an XN interface, where the first reference information indicates that the IP connection or the Xn interface exists, or the Xn interface can be set up between the second CU and the third CU; and determining, based on the first reference information, that the IP connection or the Xn interface exists between the second CU and the third CU, or the Xn interface can be set up between the second CU and the third CU. For example, the first reference information includes a plurality of CUs (including the third CU) that have IP connections to the second CU, have Xn interfaces with the second CU, or can set up Xn interfaces with the second CU. In other words, a CU (including the second CU) that has an XN interface with the first CU notifies, through the XN interface, the first CU of all CUs that are IP reachable to or have XN interfaces with the CU that has the XN interface with the first CU, and the first CU selects one of the CUs as the target donor-CU of the mIAB-DU. Correspondingly, the first CU also sends, to the CU (including the second CU) that has the XN interface with the first CU, a status of the CU that has the XN interface with the first CU or a CU to which the first CU is IP reachable. Alternatively, second reference information is received from the third CU through an XN interface, where the second reference information indicates that the IP connection or the Xn interface exists, or the Xn interface can be set up between the second CU and the third CU; and it is determined, based on the second reference information, that the IP connection or the Xn interface exists, or the Xn interface can be set up between the second CU and the third CU. For example, the second reference information includes a plurality of CUs (including the second CU) that have IP connections to the third CU, have Xn interfaces with the third CU, or can set up Xn interfaces with the third CU. For example, the second reference information includes a plurality of CUs (including the second CU) that have IP connections to the third CU, have Xn interfaces with the third CU, or can set up Xn interfaces with the third CU. In this implementation, the first reference information from the second CU is received through the XN interface, to learn that the IP connection or the Xn interface exists, or the Xn interface can be set up between the second CU and the third CU.

1002: The first CU sends a message 1 to the DU of the relay node.

Correspondingly, the DU of the relay node receives the message 1 from the first CU. The message 1 may carry identification information of the third CU, for example, a gNB ID of the third CU. The message 1 is used to trigger the relay node to initiate an F1 interface setup request to the third CU through the new logical DU. The message 1 may be an F1 setup indication (F1 setup indication). Alternatively, the message 1 is used to trigger the DU of the relay node to send identification information of the DU of the relay node to the first CU. Step 1002 is optional.

1003: The DU of the relay node sends second information to the first CU.

Correspondingly, the first CU receives the second information from the DU of the relay node. The second information includes the identification information of the DU of the relay node, for example, a gNB-DU ID of the DU of the relay node. The second information may be carried in a gNB-DU Configuration Update message or another message. For example, after receiving the message 1, the DU of the relay node sends the second information to the first CU. In other words, the message 1 received by the DU of the relay node triggers the DU of the relay node to send the second information to the first CU. It may be understood that after receiving the message 1, the DU of the relay node may notify the first CU of a gNB-DU ID of the DU2 (the new logical DU of the relay node), so that the first CU subsequently further notifies the third CU of the gNB-DU ID of the DU2.

1004: The first CU sends the first information to the third CU.

Correspondingly, the third CU receives the first information from the first CU. The first information indicates the third CU to request, from the second CU, downlink configuration information used for transmission over the target F1 interface. In this application, the target F1 interface is the to-be-set-up F1 interface between the third CU and the DU of the relay node. For example, the first information indicates the third CU to send a cross-topology traffic migration request to the second CU (for example, send an IAB Transport Migration Management Request message to the second CU), to request, from the second CU, the downlink configuration information used for the transmission over the target F1 interface.

In a possible implementation, the first information includes identification information of the second CU, the identification information of the DU of the relay node, and identification information for identifying the MT at the second CU. The first information may further include a UE XnAP ID of the MT at the first CU. In this implementation, the first information is sent to the third CU, so that the third CU requests, from the second CU based on the first information, the downlink configuration information used for the transmission over the target F1 interface.

In a possible implementation, the first information further indicates a binding relationship between the MT (a UE XnAP ID of the MT at the second CU may be used) and the DU of the relay node (the gNB-DU ID of the DU may be used).

1005: The third CU sends third information to the second CU.

Correspondingly, the second CU receives the third information from the third CU. The third information is used to request the downlink configuration information used for the transmission over the target F1 interface. For step 1005, refer to step 903.

1006: The second CU sends, to the third CU, the downlink configuration information used for the transmission over the target F1 interface.

For step 1006, refer to step 904.

1007: The DU of the relay node sends an F1 setup request message to the third CU.

In some embodiments, after obtaining uplink configuration information used for the transmission over the target F1 interface, the DU of the relay node may send the F1 setup request (F1 SETUP REQUEST) message to the third CU.

1008: The third CU sends an F1 setup response message to the DU of the relay node.

After obtaining the downlink configuration information used for the transmission over the target F1 interface and receiving the F1 SETUP REQUEST, the relay node sends the F1 setup response message to the DU of the relay node.

1009: The third CU sends a message 2 to the second CU.

The message 2 notifies the second CU that DU migration has been complete (or an F1 interface between the mIAB-DU2 and the third CU has been set up). Step 1009 is optional. The message 2 may include the UE XnAP ID of the MT at the second CU, a UE XnAP ID of the MT at the third CU, and the gNB-DU ID of the mIAB-DU2.

1009': The MT sends a message 3 to the second CU.

The message 3 notifies the second CU that DU migration has been complete (or an F1 interface between the mIAB-DU2 and the third CU has been set up). Step 1009' is optional. Optionally, the message 3 carries the gNB-DU ID of the mIAB-DU2. Step 1009 and step 1009' are two possible manners of notifying the second CU that the DU migration has been complete. The method procedure in FIG. 10 includes one of step 1009 and step 1009', or does not include step 1009 and step 1009'.

In this embodiment of this application, the first CU selects the third CU as the target donor-CU of the DU of the relay node, to ensure that the traffic of the to-be-set-up F1 interface between the DU of the relay node and the third CU can be transmitted through the topology of the second CU. In addition, the first CU sends the first information to the third CU, where the first information indicates the third CU to request, from the second CU, the downlink configuration information used for the transmission over the F1 interface, so that the third CU obtains the downlink configuration information used for the transmission over the F1 interface, and therefore the F1 interface can be set up.

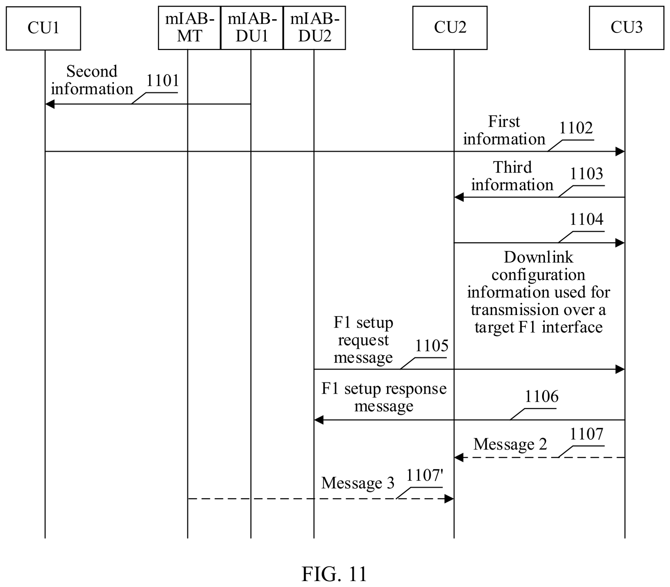

FIG. 11 is an interaction flowchart of another communication method according to an embodiment of this application. A method procedure in FIG. 11 is a possible implementation of the method described in FIG. 9. In this implementation, a DU of a relay node sends second information to a first CU, where the second information indicates the first CU to trigger a third CU to request, from a second CU, downlink configuration information used for transmission over an F1 interface, so that the third CU can obtain the downlink configuration information used for the transmission over the F1 interface. As shown in FIG. 11, the method includes the following steps.

1101: The DU of the relay node sends the second information to the first CU.

Correspondingly, the first CU receives the second information from the DU of the relay node. The second information includes identification information of the DU of the relay node and identification information of the third CU, for example, a gNB ID and/or an IP address of the third CU. The second information indicates the first CU to trigger the third CU to request, from the second CU, the downlink configuration information used for the transmission over the target F1 interface. The second information may be carried in a gNB-DU Configuration Update message or another message.

In a possible implementation, before sending the second information to the first CU, the DU of the relay node performs the following operation: The relay node determines, based on pre-configuration information of operation, administration, and maintenance (operation, administration, and maintenance, OAM), that the target F1 interface, namely, the F1 interface between the DU of the relay node and the third CU, needs to be set up in this case. After determining that the target F1 interface needs to be set up in this case, the relay node sends the second information to the first CU, to set up the target F1 interface.

1102: The first CU sends first information to the third CU.

Correspondingly, the third CU receives the first information from the first CU. The first information indicates the third CU to request, from the second CU, the downlink configuration information used for the transmission over the target F1 interface. For example, the first information indicates the third CU to send a cross-topology traffic migration request to the second CU (for example, send an IAB Transport Migration Management Request message to the second CU), to request, from the second CU, the downlink configuration information used for the transmission over the target F1 interface. A possible implementation of step 1103 is as follows: The first CU sends the first information to the third CU based on the second information. An operation of sending the first information by the first CU to the third CU may be considered as an operation of triggering, by the first CU, the third CU to request, from the second CU, the downlink configuration information used for the transmission over the target F1 interface.

In a possible implementation, the first information includes identification information of the second CU, the identification information of the DU of the relay node, and identification information for identifying an MT at the second CU. The first information may further include a UE XnAP ID of the MT at the first CU. In this implementation, the first information is sent to the third CU, so that the third CU requests, from the second CU based on the first information, the downlink configuration information used for the transmission over the target F1 interface.

In a possible implementation, the first information further indicates a binding relationship between the MT (a UE XnAP ID of the MT at the second CU may be used) and the DU of the relay node (a gNB-DU ID of the DU may be used).

1103: The third CU sends third information to the second CU.

Correspondingly, the second CU receives the third information from the third CU. The third information is used to request the downlink configuration information used for the transmission over the target F1 interface. For step 1103, refer to step 1005.

1104: The second CU sends, to the third CU, the downlink configuration information used for the transmission over the target F1 interface.

For step 1104, refer to step 1006.

1105: A DU of the relay node sends an F1 setup request message to the third CU.

For step 1105, refer to step 1007.

1106: The third CU sends an F1 setup response message to the DU of the relay node.

For step 1106, refer to step 1008.

1107: The third CU sends a message 2 to the second CU.

The message 2 notifies the second CU that DU migration has been complete (or an F1 interface between the mIAB-DU2 and the third CU has been set up). Step 1107 is optional. The message 2 may include the UE XnAP ID of the MT at the second CU, a UE XnAP ID of the MT at the third CU, and a gNB-DU ID of the mIAB-DU2.

1107': The MT sends a message 3 to the second CU.

The message 3 notifies the second CU that DU migration has been complete (or an F1 interface between an mIAB-DU2 and the third CU has been set up). Step 1107' is optional. Optionally, the message 3 carries a gNB-DU ID of the mIAB-DU2. Step 1107 and step 1107' are two possible manners of notifying the second CU that the DU migration has been complete. The method procedure in FIG. 11 includes one of step 1107 and step 1107', or does not include step 1107 and step 1107'.

In this embodiment of this application, the DU of the relay node sends the second information to the first CU, where the second information indicates the first CU to trigger the third CU to request, from the second CU, the downlink configuration information used for the transmission over the F1 interface, so that the third CU can obtain the downlink configuration information used for the transmission over the F1 interface.

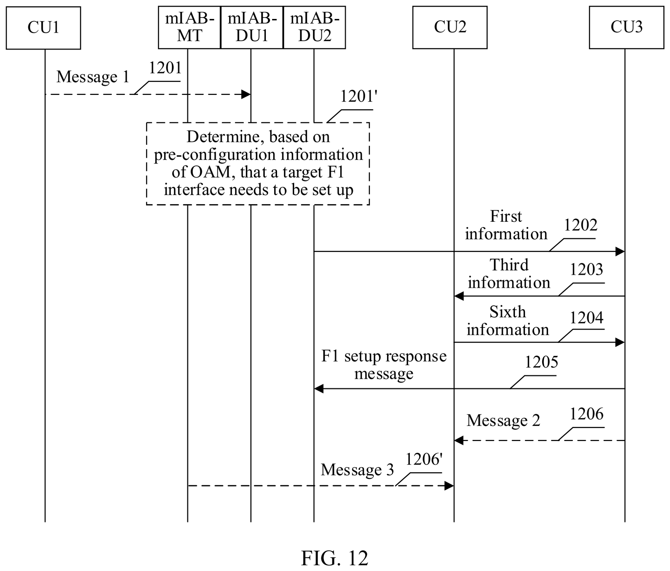

FIG. 12 is an interaction flowchart of another communication method according to an embodiment of this application. A method procedure in FIG. 12 is a possible implementation of the method described in FIG. 9. In this implementation, a DU of a relay node sends first information to a third CU, where the first information indicates the third CU to request, from a second CU, downlink configuration information used for transmission over a target F1 interface, so that the third CU can obtain the downlink configuration information used for the transmission over the target F1 interface. As shown in FIG. 12, the method includes the following steps.

1201: A first CU sends a message 1 to a DU of the relay node.

Correspondingly, the DU of the relay node receives the message 1 from the first CU. For step 1201, refer to step 1002.

1201': The relay node determines, based on pre-configuration information of OAM, that the target F1 interface needs to be set up.

It should be noted that step 1201 and step 1201' are two possible implementations. Both step 1201 and step 1201' may trigger a DU of the relay node to send the first information to the third CU, that is, trigger the DU of the relay node to perform step 1201. The method procedure in FIG. 12 includes step 1201 or step 1201'. This is not limited in this embodiment of this application.

1202: The DU of the relay node sends the first information to the third CU.

Correspondingly, the third CU receives the first information from the DU (logical DU) of the relay node. The first information indicates the third CU to request, from the second CU, the downlink configuration information used for the transmission over the target F1 interface. For example, the first information indicates the third CU to send a cross-topology traffic migration request to the second CU, to request, from the second CU, the downlink configuration information used for the transmission over the target F1 interface. If the F1 interface between the third CU and the DU of the relay node has not been set up, the first information is carried in an F1 setup request message, and indicates the third CU to request, from the second CU, downlink configuration information used for a newly set up F1 interface. If the F1 interface between the third CU and the DU of the relay node has been set up, the first information is carried in another F1 message (for example, a GNB-DU CONFIGURATION UPDATE message), to indicate the third CU to request, from the second CU, downlink configuration information required for migrating the F1 interface to a topology of the second CU. The F1 setup request message carries a gNB-DU ID and/or an IP address of the DU of the relay node, and further carries a gNB ID and/or an IP address of the second CU, and the identification information for identifying an MT at the second CU. The identification information for identifying the MT at the second CU includes at least one of the following: a BAP address, at the second CU, of the relay node to which the MT belongs, an IP address that is of the relay node to which the MT belongs and that is used for traffic transmission over the F1 interface, a C-RNTI of the MT, and a serving cell (cell) identifier of the MT. In this embodiment, before step 1202, the third CU does not obtain, from another CU, a UE XnAP ID of the MT at the second CU, and the third CU cannot carry the UE XnAP ID of the MT at the second CU when subsequently interacting with the second CU. Therefore, identification information in another form is temporarily used in the first information for identifying the MT, and the identifier needs to be identifiable by the second CU. In this case, the third CU searches for the second CU by using the identifier in a subsequent step, and the second CU sends, to the third CU, the UE XnAP ID of the MT at the second CU. The C-RNTI uniquely identifies one UE in a cell. Therefore, the C-RNTI and the serving cell (cell) ID may uniquely identify the MT at the second CU. Because the BAP address, at the second CU, of the relay node to which the MT belongs and the IP address of the relay node to which the MT belongs and that is used for the traffic transmission over the F1 interface are both allocated by the second CU, the two addresses may also identify the MT at the second CU.

1203: The third CU sends third information to the second CU.

The third information is used to request the downlink configuration information used for the transmission over the target F1 interface. The third information may include the identification information for identifying the MT at the second CU. The third information may be carried in an IAB transmission migration management request (IAB Transport Migration Management Request) message or another message.

In a possible implementation, the third information is further used to request to obtain a binding relationship between the MT and the DU of the relay node. The third information may include a UE XnAP ID of the MT at the third CU. In other words, the third information is used to request the downlink configuration information used for the transmission over the target F1 interface, and/or is used to request to obtain the binding relationship between the MT and the DU of the relay node. In this implementation, the third information is sent to the second CU, so that the binding relationship between the MT and the DU of the relay node can be further obtained.

In a possible implementation, the first information includes the identification information for identifying the MT at the second CU; and the third CU further performs the following operation: sending, to the second CU based on the identification information for identifying the MT at the second CU, information used to obtain the binding relationship between the DU of the relay node and the MT. After receiving the information, the second CU may notify the third CU of the binding relationship between the DU of the relay node and the MT. In this implementation, the information used to obtain the binding relationship between the DU and the MT of the relay node is sent to the second CU, so that information about the binding relationship between the DU and the MT of the relay node can be obtained.

In a possible implementation, the first information is carried in an F1 SETUP REQUEST message, and the F1 SETUP REQUEST message further includes a BAP address used for the transmission over the target F1 interface. When the BAP address (used for the transmission over the target F1 interface) carried in the F1 SETUP REQUEST message received by the third CU is not allocated by the third CU (for example, an identifier of the second CU that allocates the BAP address is also indicated in the F1 SETUP REQUEST message), the third CU does not determine the binding relationship between the mIAB-DU and the mIAB-MT based on the BAP address, initiates a request message (for example, an IAB Transport Migration Management Request) to the CU (namely, the second CU) that allocates the BAP address, and further obtain the binding relationship between the mIAB-DU and the mIAB-MT. In other words, only when the third CU learns that the BAP address carried in the received F1 SETUP REQUEST message is allocated by the third CU, the third CU determines the binding relationship based on the BAP address.

1204: The second CU sends sixth information to the third CU.

The sixth information includes the downlink configuration information used for the transmission over the target F1 interface and the identification information for identifying the MT at the second CU, for example, the UE XnAP ID of the MT at the second CU.

In some possible embodiments, the third CU may send fourth information to the second CU, where the fourth information includes a correspondence between an IP address used for the transmission over the target F1 interface and a DSCP or flow label used for the transmission over the target F1 interface.

In this implementation, the fourth information is sent to the second CU, so that the second CU can obtain the correspondence between the IP address used for the transmission over the F1 interface and the DSCP or flow label used for the transmission over the F1 interface.

1205: The third CU sends an F1 setup response message to the DU of the relay node.

For step 1205, refer to step 1008.

1206: The third CU sends a message 2 to the second CU.

The message 2 notifies the second CU that DU migration has been complete (or an F1 interface between the mIAB-DU2 and the third CU has been set up). Step 1206 is optional. The message 2 may include the UE XnAP ID of the MT at the second CU, the UE XnAP ID of the MT at the third CU, and a gNB-DU ID of the mIAB-DU2.

1206': The MT sends a message 3 to the second CU.

The message 3 notifies the second CU that DU migration has been complete (or an F1 interface between the mIAB-DU2 and the third CU has been set up). Step 1206' is optional. Optionally, the message 3 carries a gNB-DU ID of the mIAB-DU2. Step 1206 and step 1206' are two possible manners of notifying the second CU that the DU migration has been complete. The method procedure in FIG. 12 includes one of step 1206 and step 1206', or does not include step 1206 and step 1206'.

In this embodiment of this application, the DU of the relay node sends the first information to the third CU, where the first information indicates the third CU to request, from the second CU, the downlink configuration information used for the transmission over the target F1 interface, so that the third CU can obtain the downlink configuration information used for the transmission over the target F1 interface.

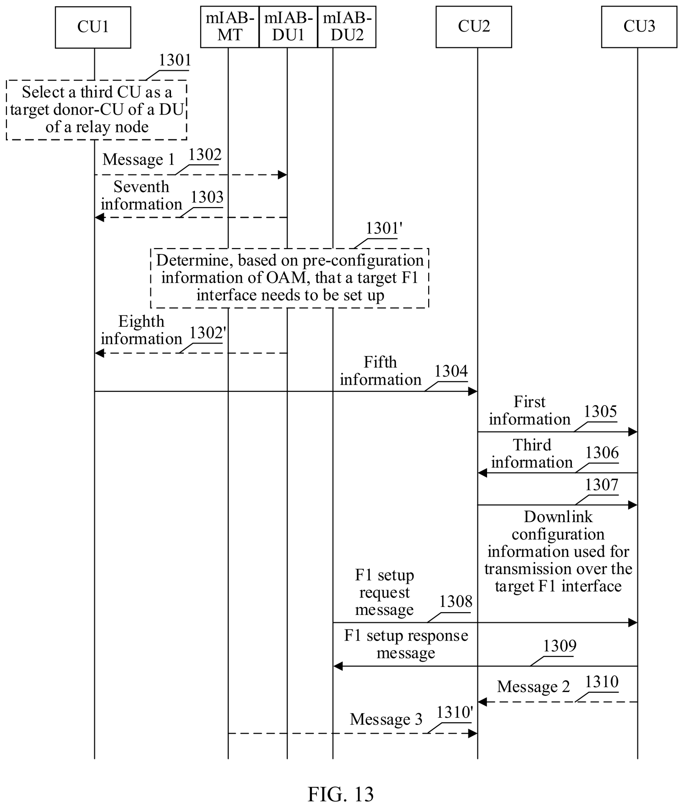

FIG. 13 is an interaction flowchart of a communication method according to an embodiment of this application. In an interaction procedure in FIG. 13, a first CU indicates a second CU to send first information to a third CU instead of directly sending the first information to the third CU. As shown in FIG. 13, the method includes the following steps.

1301: The first CU selects the third CU as a target donor-CU of a DU of a relay node.

1302: The first CU sends a message 1 to the DU of the relay node.

For step 1301 and step 1302, refer to step 1001 and step 1002. Details are not described herein again.

1303: The DU of the relay node sends seventh information to the first CU.

The seventh information includes identification information of the DU of the relay node.

1301': A relay node determines, based on pre-configuration information of OAM, that a target F1 interface needs to be set up.

1302': A DU of the relay node sends eighth information to the first CU.

The eighth information is used to trigger the first CU to send the fifth information to the second CU. The fifth information indicates (or triggers) the second CU to send the first information to the third CU, and the first information indicates the third CU to request, from the second CU, downlink configuration information used for transmission over the F1 interface.

Step 1301 to step 1303, and step 1301' and step 1302' are two different implementations. It should be understood that the method procedure in FIG. 13 includes step 1301 to step 1303, or includes step 1301' and step 1302'. This is not limited in this embodiment of this application.

1304: The first CU sends the fifth information to the second CU.

The fifth information indicates (or triggers) the second CU to send the first information to the third CU. The first information indicates the third CU to request, from the second CU, the downlink configuration information used for the transmission over the target F1 interface. The fifth information may include identification information of the third CU, the identification information of the DU of the relay node, and identification information for identifying an MT at the second CU.

In a possible implementation, the fifth information further indicates the second CU that DU migration of the relay node is to occur (or DU migration of the relay node is being performed, or the F1 interface is to be set up between the relay node and the third CU). After receiving the fifth information, the second CU does not migrate the MT of the relay node before the DU migration of the relay node is complete. In other words, the second CU migrates the MT of the relay node only after the DU migration of the relay node is complete.

1305: The second CU sends the first information to the third CU.

The first information may include at least one of identification information of the second CU, the identification information of the DU of the relay node, and the identification information for identifying the MT at the second CU.

In a possible implementation, the first information indicates a binding relationship between the MT and the DU of the relay node. In this implementation, the first information may enable the third CU to learn of the binding relationship between the MT and the DU of the relay node.

In a possible implementation, the second CU may further perform the following operation: receiving ninth information, where the ninth information indicates that the DU migration of the relay node has been complete (or the F1 interface between the DU of the relay node and the third CU has been set up). The ninth information is from the third CU or the relay node. Before receiving the ninth information, the second CU cannot migrate the MT of the relay node.

1306: The third CU sends third information to the second CU.

For step 1306, refer to step 903.

1307: The second CU sends, to the third CU, the downlink configuration information used for the transmission over the target F1 interface.

1308: A DU of the relay node sends an F1 setup request message to the third CU.

1309: The third CU sends an F1 setup response message to the DU of the relay node.

1310: The third CU sends a message 2 to the second CU.

The message 2 notifies the second CU that the DU migration has been complete (or an F1 interface between the mIAB-DU2 and the third CU has been set up). Step 1310 is optional. The message 2 may include the UE XnAP ID of the MT at the second CU, the UE XnAP ID of the MT at the third CU, and a gNB-DU ID of the mIAB-DU2.

1310': The MT sends a message 3 to the second CU.

The message 3 notifies the second CU that the DU migration has been complete (or an F1 interface between the mIAB-DU2 and the third CU has been set up). Step 1310' is optional. Optionally, the message 3 carries a gNB-DU ID of the mIAB-DU2. Step 1310 and step 1310' are two possible manners of notifying the second CU that the DU migration has been complete. The method procedure in FIG. 13 includes one of step 1310 and step 1310', or does not include step 1310 and step 1310'.

In this embodiment of this application, the first CU sends the fifth information to the second CU, the second CU sends the first information to the third CU, and the third CU sends the third information to the second CU, so that the third CU can obtain the downlink configuration information used for the transmission over the target F1 interface.

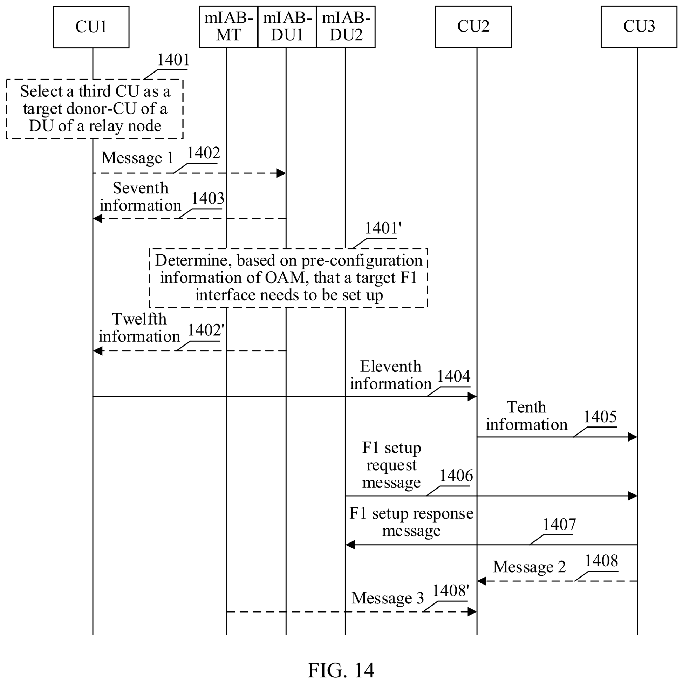

FIG. 14 is an interaction flowchart of another communication method according to an embodiment of this application. In the method procedure in FIG. 14, a first CU sends eleventh information to a second CU, where the eleventh information indicates the second CU to send, to a third CU, downlink configuration information used for transmission over a target F1 interface (not set up yet). As shown in FIG. 14, the method includes the following steps.

1401: The first CU selects the third CU as a target donor-CU of a DU of a relay node.

1402: The first CU sends a message 1 to the DU of the relay node.

For step 1401 and step 1402, refer to step 1001 and step 1002. Details are not described herein again.

1403: The DU of the relay node sends seventh information to the first CU.

1401': A relay node determines, based on pre-configuration information of OAM, that a target F1 interface needs to be set up.

1402': A DU of the relay node sends twelfth information to the first CU.

The twelfth information may include at least one of identification information of the third CU, identification information of the DU of the relay node, and identification information of the second CU. The twelfth information is used to trigger the first CU to send the eleventh information to the second CU. The eleventh information indicates the second CU to send, to the third CU, the downlink configuration information used for the transmission over the target F1 interface (not set up yet).

Step 1401 to step 1403, and step 1401' and step 1402' are two different implementations. It should be understood that the method procedure in FIG. 14 includes step 1401 to step 1403, or includes step 1401' and step 1402'. This is not limited in this embodiment of this application.

1404: The first CU sends the eleventh information to the second CU.

The eleventh information may include the identification information of the third CU, the identification information of the DU of the relay node, and identification information for identifying an MT of the relay node at the second CU.

In a possible implementation, the eleventh information further indicates the second CU that DU migration of the relay node is to occur (or DU migration of the relay node is being performed, or the F1 interface is to be set up between the relay node and the third CU).

In a possible implementation, the eleventh information further indicates a binding relationship between the MT and the DU of the relay node. In this implementation, the eleventh information may enable the third CU to learn of the binding relationship between the MT and the DU of the relay node.

1405: The second CU sends tenth information to the third CU.

The tenth information includes at least one of the identification information of the second CU, the identification information of the DU of the relay node, the identification information for identifying the MT of the relay node in the second CU, and the downlink configuration information used for the transmission over the target F1 interface.

1406: A DU of the relay node sends an F1 setup request message to the third CU.

1407: The third CU sends an F1 setup response message to the DU of the relay node.

1408: The third CU sends a message 2 to the second CU.

The message 2 notifies the second CU that the DU migration has been complete (or an F1 interface between an mIAB-DU2 and the third CU has been set up). Step 1408 is optional. The message 2 may include the UE XnAP ID of the MT at the second CU, the UE XnAP ID of the MT at the third CU, and a gNB-DU ID of the mIAB-DU2.

1408': The MT sends a message 3 to the second CU.

The message 3 notifies the second CU that the DU migration has been complete (or an F1 interface between the mIAB-DU2 and the third CU has been set up). Step 1408' is optional. Optionally, the message 3 carries a gNB-DU ID of the mIAB-DU2. Step 1408 and step 1408' are two possible manners of notifying the second CU that the DU migration has been complete. The method procedure in FIG. 14 includes one of step 1408 and step 1408', or does not include step 1408 and step 1408'.

In this embodiment of this application, the first CU sends the eleventh information to the second CU, and the second CU sends the tenth information to the third CU; and the downlink configuration information used for the transmission over the target F1 interface may be directly sent to the third CU, so that signaling overheads can be reduced.

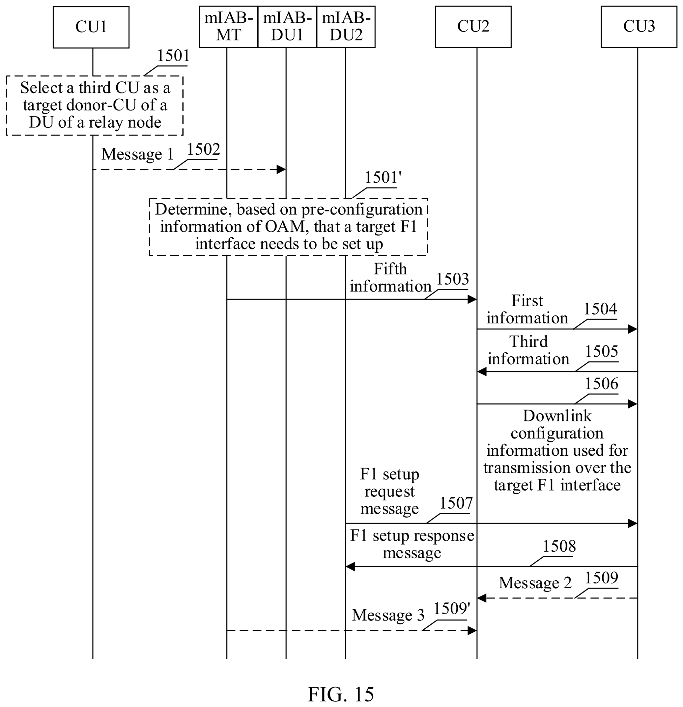

FIG. 15 is an interaction flowchart of a communication method according to an embodiment of this application. In an interaction procedure in FIG. 15, a first CU indicates a second CU to send first information to a third CU instead of directly sending the first information to the third CU. As shown in FIG. 15, the method includes the following steps.

1501: The first CU selects the third CU as a target donor-CU of a DU of a relay node.

1502: The first CU sends a message 1 to the DU of the relay node.

For step 1501 and step 1502, refer to step 1001 and step 1002. Details are not described herein again. After the DU of the relay node receives the message 1, the relay node may determine that a target F1 interface needs to be set up.

1501': A relay node determines, based on pre-configuration information of OAM, that a target F1 interface needs to be set up.

Step 1501 and step 1502, and step 1501' are two different implementations. It should be understood that the method procedure in FIG. 15 includes step 1501 and step 1502, or includes step 1501'. This is not limited in this embodiment of this application.

1503: An MT of the relay node sends fifth information to the second CU.

The fifth information may include identification information of the third CU and identification information of the DU of the relay node. The fifth information indicates (or triggers) the second CU to send the first information to the third CU. The first information indicates the third CU to request, from the second CU, downlink configuration information used for transmission over the target F1 interface. Alternatively, the fifth information indicates the second CU to trigger the third CU to initiate cross-topology traffic migration, and the third CU needs to request, from the second CU, the downlink configuration information used for the transmission over the target F1 interface to initiate the cross-topology traffic migration.

In a possible implementation, the fifth information further indicates the second CU that DU migration of the relay node is to occur (or DU migration of the relay node is being performed, or the F1 interface is to be set up between the relay node and the third CU). After receiving the fifth information, the second CU does not migrate the MT of the relay node before the DU migration of the relay node is complete. In other words, the second CU migrates the MT of the relay node only after the DU migration of the relay node is complete.

1504: The second CU sends the first information to the third CU.

The first information may include identification information of the second CU, the identification information of the DU of the relay node, and identification information for identifying the MT at the second CU.

In a possible implementation, the first information indicates a binding relationship between the MT and the DU of the relay node. In this implementation, the first information may enable the third CU to learn of the binding relationship between the MT and the DU of the relay node.

In a possible implementation, the second CU may further perform the following operation: receiving ninth information, where the ninth information indicates that the DU migration of the relay node has been complete (or the F1 interface between the DU of the relay node and the third CU has been set up). The ninth information is from the third CU or the relay node. Before receiving the ninth information, the second CU cannot migrate the MT of the relay node.

1505: The third CU sends third information to the second CU.

For step 1505, refer to step 903.

1506: The second CU sends, to the third CU, the downlink configuration information used for the transmission over the target F1 interface.

1507: A DU of the relay node sends an F1 setup request message to the third CU.

1508: The third CU sends an F1 setup response message to the DU of the relay node.

1509: The third CU sends a message 2 to the second CU.

The message 2 notifies the second CU that the DU migration has been complete (or an F1 interface between the mIAB-DU2 and the third CU has been set up). Step 1509 is optional. The message 2 may include the UE XnAP ID of the MT at the second CU, the UE XnAP ID of the MT at the third CU, and a gNB-DU ID of the mIAB-DU2.

1509': The MT sends a message 3 to the second CU.

The message 3 notifies the second CU that the DU migration has been complete (or an F1 interface between the mIAB-DU2 and the third CU has been set up). Step 1509' is optional. Optionally, the message 3 carries a gNB-DU ID of the mIAB-DU2. Step 1509 and step 1509' are two possible manners of notifying the second CU that the DU migration has been complete. The method procedure in FIG. 15 includes one of step 1509 and step 1509', or does not include step 1509 and step 1509'.

In this embodiment of this application, the MT of the relay node sends the fifth information to the second CU, the second CU sends the first information to the third CU, and the third CU sends the third information to the second CU, so that the third CU can obtain the downlink configuration information used for the transmission over the target F1 interface.

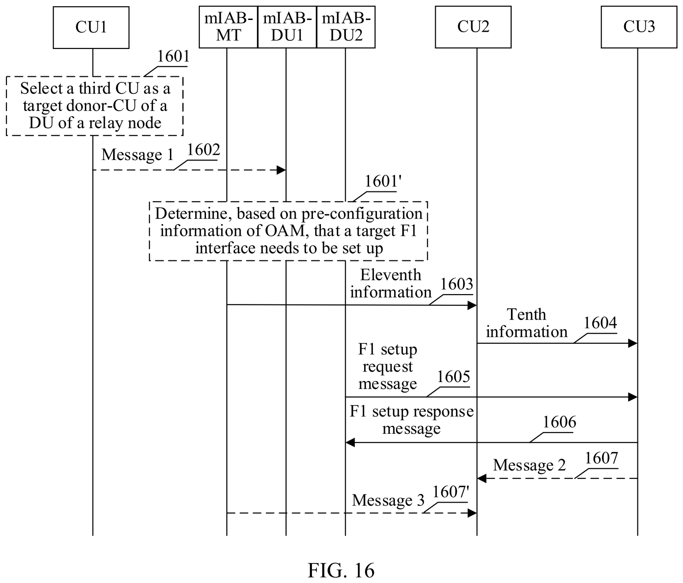

FIG. 16 is an interaction flowchart of another communication method according to an embodiment of this application. In the method procedure in FIG. 16, a first CU sends eleventh information to a second CU, where the eleventh information indicates the second CU to send, to a third CU, downlink configuration information used for transmission over a target F1 interface (not set up yet). As shown in FIG. 16, the method includes the following steps.

1601: The first CU selects the third CU as a target donor-CU of a DU of a relay node.

1602: The first CU sends a message 1 to the DU of the relay node.

For step 1601 and step 1602, refer to step 1001 and step 1002. Details are not described herein again. After the DU of the relay node receives the message 1, the relay node may determine that the target F1 interface needs to be set up.

1601': A relay node determines, based on pre-configuration information of OAM, that the target F1 interface needs to be set up.

Step 1601 and step 1602, and step 1601' are two different implementations. It should be understood that the method procedure in FIG. 16 includes step 1601 and step 1602, or includes step 1601'. This is not limited in this embodiment of this application.

1603: An MT of the relay node sends the eleventh information to the second CU.

The eleventh information indicates the second CU to send, to the third CU, the downlink configuration information used for the transmission over the target F1 interface (not set up yet). The eleventh information includes identification information of the third CU and identification information of the DU of the relay node.

In a possible implementation, the eleventh information further indicates the second CU that DU migration of the relay node is to occur (or DU migration of the relay node is being performed, or the F1 interface is to be set up between the relay node and the third CU).

In a possible implementation, the eleventh information indicates a binding relationship between the MT and the DU of the relay node. In this implementation, the eleventh information may enable the third CU to learn of the binding relationship between the MT and the DU of the relay node. 1604: The second CU sends tenth information to the third CU.

The tenth information includes at least one of identification information of the second CU, the identification information of the DU of the relay node, identification information for identifying the MT of the relay node in the second CU, and the downlink configuration information used for the transmission over the target F1 interface. In some embodiments, the tenth information further notifies the third CU of a binding relationship between the mIAB-MT and an mIAB-DU2. In other words, the tenth information further indicates the binding relationship between the MT and the DU of the relay node.

1605: The DU of the relay node sends an F1 setup request message to the third CU.

1606: The third CU sends an F1 setup response message to the DU of the relay node.

In this embodiment of this application, the MT of the relay node sends the eleventh information to the second CU, and the second CU sends the tenth information to the third CU; and the downlink configuration information used for the transmission over the target F1 interface may be directly sent to the third CU, so that signaling overheads can be reduced.

1607: The third CU sends a message 2 to the second CU.

The message 2 notifies the second CU that the DU migration has been complete (or an F1 interface between the mIAB-DU2 and the third CU has been set up). Step 1607 is optional. The message 2 may include the UE XnAP ID of the MT at the second CU, the UE XnAP ID of the MT at the third CU, and a gNB-DU ID of the mIAB-DU2.

1607': The MT sends a message 3 to the second CU.

The message 3 notifies the second CU that the DU migration has been complete (or an F1 interface between the mIAB-DU2 and the third CU has been set up). Step 1607' is optional. Optionally, the message 3 carries a gNB-DU ID of the mIAB-DU2.

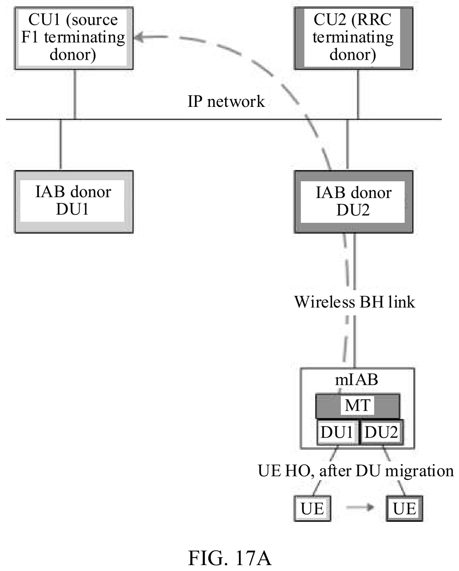

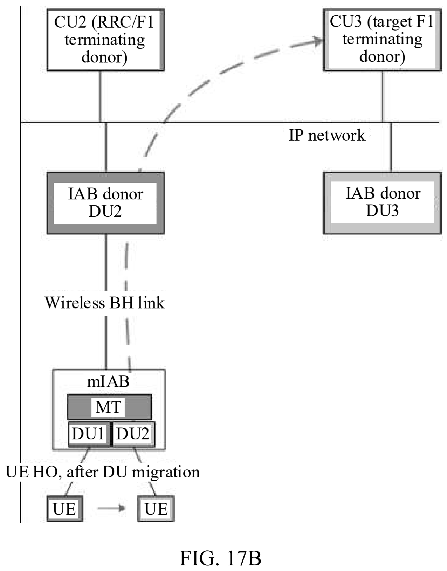

In the foregoing embodiment, a scenario in which the first CU, the second CU, and the third CU are three different CUs is mainly analyzed; however, cases in which the second CU and the third CU are a same CU, and the first CU and the second CU are a same CU belong to two special examples, and respectively correspond to FIG. 17A and FIG. 17B. FIG. 17A and FIG. 17B are examples of scenarios in which a DU is migrated and an MT is not migrated according to embodiment of this application. In the scenario shown in FIG. 17A, the MT is not migrated, and is always in a second CU, and the DU is migrated from a first CU to the second CU. In the scenario shown in FIG. 17A, the MT is always in the second CU, the DU is migrated from the first CU to the second CU, downlink configuration information used for transmission over a target F1 interface is allocated by the second CU, and the second CU does not need to obtain, from another CU through interaction, the downlink configuration information used for the transmission over the target F1 interface. In the scenario shown in FIG. 17B, the MT is not migrated, and is always in a second CU, and the DU is migrated from the second CU to a third CU.

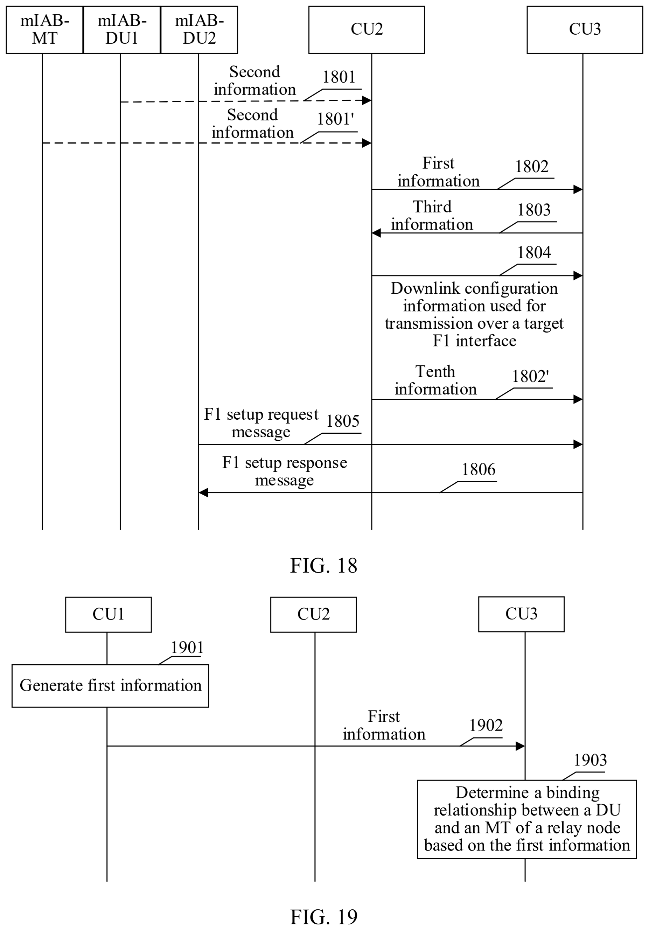

FIG. 18 is an interaction flowchart of another communication method according to an embodiment of this application. The communication method shown in FIG. 18 is applicable to the scenario shown in FIG. 17B. As shown in FIG. 18, the method may include the following steps.

1801: A DU of a relay node sends second information to a second CU.

The second information may be carried in an existing gNB-DU Configuration Update message or a new message.

1801': An MT sends second information to a second CU.

The second information in step 1801 is the same as that in step 1801'. Step 1801 and step 1801' are two possible implementations, and both can enable the second CU to obtain the second information. A procedure in FIG. 18 includes step 1801 or step 1801'. The second information may include identification information of the DU of the relay node. Optionally, the second information further includes identification information of a third CU. Before the DU or the MT of the relay node sends the second information to the second CU, the relay node may perform the following operations: The DU of the relay node receives a message 1 from a first CU; and the relay node determines, based on the message 1, that a target F1 interface needs to be set up. Alternatively, before the DU or the MT of the relay node sends the second information to the second CU, the relay node may perform the following operation: The relay node determines, based on pre-configuration information of OAM, that a target F1 interface needs to be set up.

In a possible implementation, the second information indicates (or triggers) the second CU to send first information to the third CU. The first information indicates the third CU to request, from the second CU, downlink configuration information used for transmission over the target F1 interface. Alternatively, the first information indicates the second CU to trigger the third CU to initiate cross-topology traffic migration, and the third CU needs to request, from the second CU, downlink configuration information used for transmission over the target F1 interface to initiate the cross-topology traffic migration.

In a possible implementation, the second information indicates the second CU to send, to the third CU, the downlink configuration information used for the transmission over the target F1 interface (not set up yet).

1802: The second CU sends the first information to the third CU.

When the second information indicates (or triggers) the second CU to send the first information to the third CU, the method procedure in FIG. 18 includes step 1802 to step 1804. For step 1802, refer to step 1305.

1803: The third CU sends third information to the second CU.

For step 1803, refer to step 903.

1804: The second CU sends, to the third CU, the downlink configuration information used for the transmission over the target F1 interface.

1802'. The second CU sends tenth information to the third CU.

When the second information indicates the second CU to send, to the third CU, the downlink configuration information used for the transmission over the target F1 interface (not set up yet), the method procedure in FIG. 18 includes 1802'. The tenth information includes at least one of identification information of the second CU, the identification information of the DU of the relay node, identification information for identifying the MT of the relay node in the second CU, and the downlink configuration information used for the transmission over the target F1 interface.

Step 1802 to step 1804 and step 1802' are two possible implementations in which the third CU obtains the downlink configuration information used for the transmission over the target F1 interface. It should be understood that the method procedure in FIG. 18 includes step 1802 to step 1804, or includes step 1802'. This is not limited in this embodiment of this application.

1805: A DU of the relay node sends an F1 setup request message to the third CU.

1806: The third CU sends an F1 setup response message to the DU of the relay node.

In this embodiment of this application, the second CU sends, to the third CU, the downlink configuration information used for the transmission over the target F1 interface or the tenth information, so that the third CU can obtain the downlink configuration information used for the transmission of the target F1 interface.

According to the communication solution in the foregoing embodiment, the third CU can obtain the downlink configuration information used for the transmission over the target F1 interface. The following describes a communication solution in which the third CU can obtain a binding relationship between the DU of the relay node and the MT of the relay node.

FIG. 19 is an interaction flowchart of another communication method according to an embodiment of this application. As shown in FIG. 19, the method includes the following steps.

1901: A first CU generates first information.

The first information indicates a binding relationship between a DU of a relay node and an MT of the relay node. A third CU is a target donor-CU of the DU of the relay node, there is an RRC connection between the MT and a second CU, and the second CU is different from the third CU. The first information may include identification information of the DU of the relay node and identification information for identifying the MT at the second CU.

In some possible embodiments, before the first CU generates the first information, a procedure in FIG. 19 further includes step 1001 to step 1003.

In some possible embodiments, before the first CU generates the first information, a procedure in FIG. 19 further includes step 1101.

In some possible embodiments, the first CU in FIG. 19 is replaced with the second CU, and before the second CU sends the first information, a procedure in FIG. 19 further includes step 1301 to step 1304.

In some possible embodiments, before the first CU generates the first information, a procedure in FIG. 19 further includes step 1401 to step 1403. Twelfth information is used to trigger the first CU to send the first information to the second CU.

In some possible embodiments, the first CU in FIG. 19 is replaced with the second CU, and before the second CU sends the first information, a procedure in FIG. 19 further includes step 1501 to step 1504.

In some possible embodiments, the first CU in FIG. 19 is replaced with the MT of the relay node. Before the MT of the relay node sends the first information, a procedure in FIG. 19 further includes step 1601 and step 1602, or step 1601'.

1902: The first CU sends the first information to the third CU.

In a possible implementation, before sending the first information to the third CU, the first CU receives request information from the third CU, where the request information is used to request the binding relationship between the MT and the DU of the relay node, and the request information includes the identification information for identifying the MT at the second CU. The first CU sends the first information to the third CU based on the request information. In some possible embodiments, before the first CU receives the request information from the third CU, the first CU sends an F1 setup request message to the third CU. The F1 setup request message may carry a gNB-DU ID and/or an IP address of the DU of the relay node, and further carry a gNB ID and/or an IP address of the second CU, and the identification information for identifying the MT at the second CU.

In a possible implementation, the first information further indicates the third CU to request, from the second CU, downlink configuration information used for transmission over a target F1 interface. For example, the first information further indicates the third CU to initiate a cross-topology traffic migration request to the second CU, to request, from the second CU, the downlink configuration information used for the transmission over the target F1 interface.

1903: The third CU determines the binding relationship between the DU and the MT of the relay node based on the first information.

In this embodiment of this application, the binding relationship between the DU and the MT of the relay node may be determined based on the first information.

As a start point of a downlink transmission BAP layer, a donor-DU needs to perform downlink mapping (DL Mapping). A meaning of the DL mapping is as follows: A BAP routing ID and egress link information (including a BAP address and an RLC CH ID of a next-hop node) of the BAP layer are obtained based on {target IP address+DSCP/flow label} in an IP header. Working details of the DL mapping are as follows: The second CU configures a mapping relationship from {target IP address+DSCP/flow label} to {BAP routing ID+Next hop BAP Address+Next hop RLC CH ID} for a donor-DU2, and the second CU sends a mapping relationship between the target IP address and the DSCP/flow label to the third CU. When sending downlink F1 data, the third CU determines a corresponding DSCP/flow label based on the target IP address (the second CU may send, to the third CU, a plurality of DSCP/flow labels corresponding to one IP address, and sends each mapping relationship to the third CU; in this case, the third CU determines, based on the IP address and a QoS requirement of the third CU, a specific DSCP/flow label to be used), and then adds the IP address and the DSCP/flow label to the IP header. After the downlink F1 data arrives at the donor-DU2, the donor-DU2 opens the IP header and finds the determined {target IP address+DSCP/flow label}. Then, the donor-DU2 processes the data at the BAP layer according to a configured DL mapping rule, encapsulates a BAP header (writes the BAP routing ID) outside the IP header, and sends data on a corresponding link (link) and an RLC CH. The CU may configure the DL mapping for the donor-DU by using a UE CONTEXT SETUP REQUEST/UE CONTEXT MODIFICATION REQUEST/BAP MAPPING CONFIGURATION. In this application, the donor-DU2 is a donor-DU managed by the second CU.

It can be learned from the foregoing embodiment that, to enable the third CU to obtain a DSCP/flow label used for the transmission over the target F1 interface, a large amount of interaction is performed. However, the DSCP/flow label is used for a QoS requirement of a refined management service. According to a protocol, the DSCP/flow label is optional when the downlink mapping (DL Mapping) is performed on the BAP layer of the donor-DU. Usually, carrying of the DSCP/flow label in the IP header is recommended, but is not mandatory in the protocol. For user-plane data, there are various QoS types. Therefore, there is a higher necessity for carrying a DSCP/flow label during DL mapping for F1-U traffic. However, for an F1-C on a control plane, a QoS requirement is simple, and a necessity for carrying a DSCP/flow label is lower than that for an F1-U. The following communication solution mainly resolves the following problem: If the third CU does not obtain a DSCP/flow label when sending a 1^{st} downlink F1 SETUP RESPONSE, how does the donor-DU2 perform downlink mapping? In other words, before the third CU obtains the DSCP/flow label (for example, in a phase of sending over the F1-C, the DSCP/flow label may not be required), how does the donor-DU2 perform downlink mapping?

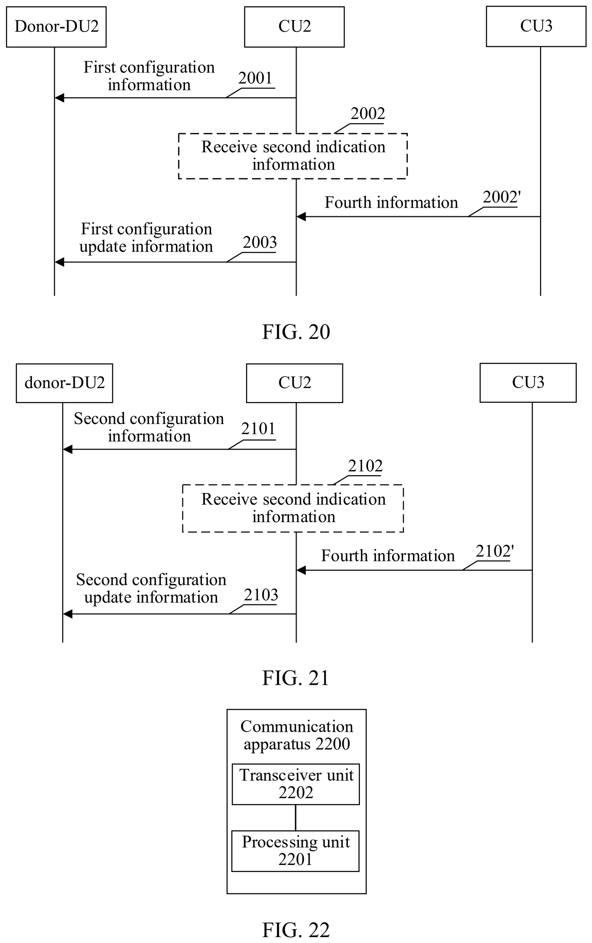

FIG. 20 is an interaction flowchart of another communication method according to an embodiment of this application. The communication solution shown in FIG. 20 may resolve a problem of how a donor-DU2 performs downlink mapping before a third CU obtains a DSCP/flow label. As shown in FIG. 20, the method includes the following steps.

2001: A second CU sends first configuration information to a donor-DU managed by the second CU.

The donor-DU2 in FIG. 20 represents the donor-DU managed by the second CU. For example, the second CU sends, in two manners other than by using a UE CONTEXT SETUP REQUEST, the first configuration information to the donor-DU managed by the second CU. The first configuration information notifies the donor-DU managed by the second CU that DL mapping is performed only based on an IP address. The first configuration information does not include a DSCP/flow label.

2002: The second CU receives second indication information.

The second indication information indicates the second CU to send, to the third CU, downlink configuration information used for transmission over a target F1 interface. For example, the second indication information is the third information or the eleventh information in the foregoing embodiment. Step 2002 is optional. That the second CU receives the second indication information is a possible implementation in which the second CU learns that the third CU is to obtain or has obtained a correct DSCP/flow label. The second CU may alternatively learn, in another manner, that the third CU is to obtain or has obtained the correct DSCP/flow label.

2002': The third CU sends fourth information to the second CU.

The fourth information includes a correspondence between an IP address used for the transmission over the target F1 interface and a DSCP or flow label used for the transmission over the target F1 interface. The correspondence indicates a DSCP/flow label that the third CU expects to add to a data packet of each IP address. Step 2002' is optional. Step 2002' is a possible implementation in which the second CU learns that the third CU is to obtain or has obtained the correct DSCP/flow label.

2003: The second CU sends first configuration update information to the donor-DU managed by the second CU.

The first configuration update information notifies the donor-DU managed by the second CU to perform DL mapping based on the IP address and the DSCP/flow label. The first configuration update information includes the IP address and the DSCP/flow label. After receiving the second indication information or the fourth information, the second CU determines that the DL mapping based on the IP address and the DSCP/flow label needs to be enabled, and the DL mapping cannot be performed only based on the IP address. In this case, the second CU initiates a DL mapping configuration update to the donor-DU2, in other words, sends the first configuration update information to the donor-DU managed by the second CU. For example, the second CU may send, in two manners other than by using a UE CONTEXT SETUP REQUEST, the first configuration update information to the donor-DU managed by the second CU, because an initial context related to an MT has been set up. If the second CU receives the fourth information, the correspondence between the IP address and the DSCP/flow label in the first configuration update information is what the third CU expects to add.

In this embodiment of this application, before the third CU obtains the DSCP/flow label, the donor-DU managed by the second CU performs downlink mapping only based on the IP address. When the third CU is to obtain or has obtained the correct DSCP/flow label, the donor-DU managed by the second CU performs DL mapping based on the IP address and the DSCP/flow label.

FIG. 21 is an interaction flowchart of another communication method according to an embodiment of this application. The communication solution shown in FIG. 21 may resolve a problem of how a donor-DU2 performs downlink mapping before a third CU obtains a DSCP/flow label. As shown in FIG. 21, the method includes the following steps.

2101: A second CU sends second configuration information to a donor-DU managed by the second CU.

For example, the second CU may send, in two manners other than by using a UE CONTEXT SETUP REQUEST, the second configuration information to the donor-DU managed by the second CU, because an initial context related to an MT has been set up. The second configuration information includes an IP address, a DSCP/flow label, and third indication information. Optionally, the second configuration information includes a correspondence between the IP address and the DSCP/flow label. The third indication information indicates the donor-DU2 to ignore a DSCP/flow label value in an IP header of an F1 data packet sent by the third CU (if the third CU adds an incorrect DSCP/flow label or a random DSCP/flow label). The third indication information further indicates the donor-DU managed by the second CU to perform DL mapping based on the DSCP/flow label corresponding to the IP address in the second configuration information. If a same IP address corresponds to a plurality of DSCPs/flow labels, the donor-DU2 selects one of the DSCPs/flow labels. Alternatively, the third indication information further indicates the donor-DU2 to perform DL mapping based on the DSCP/flow label corresponding to the IP address in the second configuration information, although an IP header of a data packet sent by the third CU contains no DSCP/flow label value (if the third CU does not add any DSCP/flow label). If a same IP address corresponds to a plurality of DSCPs/flow labels, the donor-DU2 selects one of the DSCPs/flow labels.

2102: The second CU receives second indication information.

For step 2102, refer to step 2002.

2102': The third CU sends fourth information to the second CU.

For step 2102', refer to step 2002'.

2103: The second CU sends second configuration update information to the donor-DU managed by the second CU.

The second configuration update information may include fourth indication information. The fourth indication information notifies the donor-DU2 to cancel the DL mapping operation performed by ignoring the DSCP/flow label value in the IP header of the F1 data packet in step 2101, or based on the DSCP/flow label corresponding to the IP address configured in step 2101, in other words, the normal DL mapping operation performed based on a DSCP/flow label in the IP header of the data packet sent by the third CU is resumed.

After receiving the second indication information or the fourth information, the second CU determines that DL mapping based on the IP address and the DSCP/flow label needs to be enabled, and the DL mapping cannot be performed only based on the IP address. In this case, the second CU initiates a DL mapping configuration update to the donor-DU2, in other words, sends the second configuration update information to the donor-DU managed by the second CU. For example, the second CU may send, in two manners other than by using a UE CONTEXT SETUP REQUEST, the first configuration update information to the donor-DU managed by the second CU, because an initial context related to an MT has been set up.

In this embodiment, when the third CU has not obtained a correct DSCP/flow label, the donor-DU2 performs DL mapping only based on the IP address or based on the DSCP/flow label configured by the second CU; and when the third CU has obtained or is to obtain the correct DSCP/flow label, the donor-DU2 resumes performing DL mapping based on the DSCP/flow label in the IP header.

FIG. 22 is a possible example block diagram of a communication apparatus in an embodiment of this application. As shown in FIG. 22, the communication apparatus 2200 may include a processing unit 2201 and a transceiver unit 2202. The processing unit 2201 is configured to control and manage an action of the communication apparatus 2200. The transceiver unit 2202 is configured to support communication between the communication apparatus 2200 and another device. Optionally, the transceiver unit 2202 may include a receiving unit and/or a sending unit, which are respectively configured to perform a receiving operation and a sending operation. Optionally, the communication apparatus 2200 may further include a storage unit, configured to store program code and/or data of the communication apparatus 2200. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the first CU, the second CU, the third CU, the IAB-node, the mIAB-DU, the mIAB-MT, or the like.

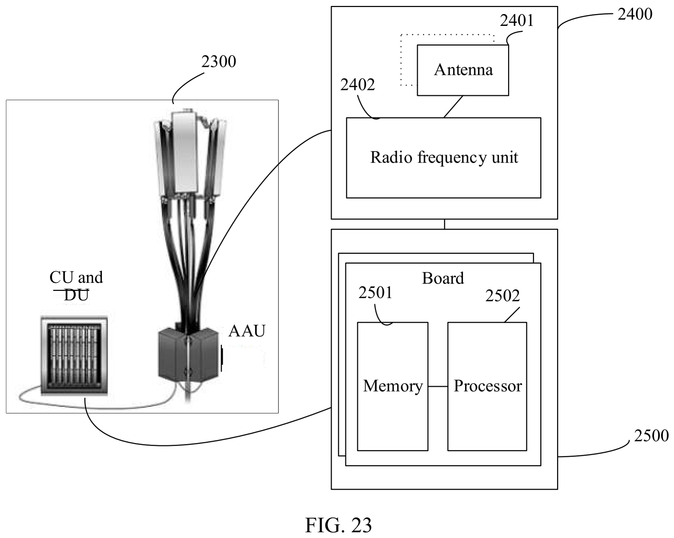

This application further provides a network device. FIG. 23 is a diagram of a structure of a network device 2300 according to an embodiment of this application. For example, the network device 2300 may be a first CU, a second CU, a third CU, or an IAB-DU, and is configured to perform a function of the network device in the foregoing method embodiments. It should be understood that the following is merely an example. In a future communication system, the network device may have another form and composition.

For example, in a 5G communication system, the network device 2300 may include a CU, a DU, and an AAU. In comparison with a network device in an LTE communication system that includes one or more radio frequency units, for example, a remote radio unit (remote radio unit, RRU) and one or more building baseband units (building baseband units, BBUs),
a non-real-time part of the original BBU is split off and redefined as the CU, which is responsible for processing a non-real-time protocol and service, some physical layer processing functions of the BBU are combined with the original RRU and a passive antenna into the AAU, and remaining functions of the BBU are redefined as the DU, which is responsible for processing a physical layer protocol and a real-time service. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form, as shown in FIG. 23, is consistent with that of a conventional 4G network device. The CU and the DU are deployed on same hardware. It should be understood that FIG. 23 is merely an example, and constitutes no limitation on the protection scope of this application. For example, a deployment form may alternatively be that DUs are deployed in a BBU equipment room, CUs or DUs are deployed together, or CUs are centralized at a higher level.

An AAU 2400 may implement a transceiver function corresponding to the transceiver unit 2202 in FIG. 22. Optionally, the AAU 2400 may also be referred to as a transceiver machine, a transceiver circuit, a transceiver, or the like, and may include at least one antenna 2401 and a radio frequency unit 2402. Optionally, the AAU 2400 may include a receiving unit and a sending unit. The receiving unit may correspond to a receiver (or referred to as a receiving machine or a receiving circuit), and the sending unit may correspond to a transmitter (or referred to as a transmitting machine or a transmitting circuit). An internal processing function that can be implemented by the CU and a DU2500 corresponds to a function of the processing unit 2201 in FIG. 22. Optionally, the CU and the DU2500 may control the network device or the like, and may be referred to as controllers. The AAU, the CU, and the DU may be physically disposed together, or may be physically disposed separately.

In addition, the network device is not limited to the form shown in FIG. 23, and may alternatively be in another form. For example, the network device includes a BBU and an adaptive radio unit (adaptive radio unit, ARU), or includes a BBU and an AAU; or may be a customer premises equipment (customer premises equipment, CPE), or may be in another form. This is not limited in this application.

In an example, the CU and the DU2500 may include one or more boards. A plurality of boards may jointly support a radio access network (for example, an LTE network) of a single access standard, or may respectively support radio access networks (for example, an LTE network, a 5G network, a future network, or another network) of different access standards. The CU and the DU2500 further include a memory 2501 and a processor 2502. The memory 2501 is configured to store necessary instructions and necessary data. The processor 2502 is configured to control the network device to perform a necessary action, for example, is configured to control the network device to perform an operation procedure related to the network device in the foregoing method embodiments. The memory 2501 and the processor 2502 may serve the one or more boards. In other words, a memory and a processor may be disposed on each board. Alternatively, a plurality of boards may share a same memory and a same processor. In addition, a necessary circuit may further be disposed on each board.

It should be understood that the network device 2300 shown in FIG. 23 can implement functions of the network device in the method embodiments in FIG. 9 to FIG. 16 and FIG. 18 to FIG. 21. Operations and/or functions of units in the network device 2300 are separately used to implement corresponding procedures performed by the network device in the method embodiments of this application. To avoid or reduce repetition, detailed descriptions are properly omitted herein. The structure of the network device shown in FIG. 23 is merely a possible form, but shall not constitute any limitation on embodiments of this application. In this application, a possibility that there may be a network device structure in another form in the future is not excluded.

The CU and the DU2500 may be configured to perform an action that is described in the foregoing method embodiments and that is implemented inside the network device, and the AAU 2400 may be configured to perform an action of sending from the network device to another device and an action of receiving from another device in the foregoing method embodiments. For details, refer to the descriptions in the foregoing method embodiments. Details are not described herein again. An embodiment of this application further provides a communication system. The communication system includes the first CU, the second CU, and the third CU.

An embodiment of this application further provides a communication system. The communication system includes the donor-CU2, the second CU, and the third CU.

An embodiment of this application further provides a communication system. The communication system includes the first CU, the second CU, the third CU, and the IAB-node.

This application further provides a chip. The chip includes a communication interface and a processor. The communication interface is configured to receive and send a signal of the chip. The processor is configured to execute computer program instructions, so that a communication apparatus including the chip performs the method in the foregoing embodiments.

Based on the foregoing embodiments, an embodiment of this application further provides a readable storage medium. The readable storage medium stores instructions. When the instructions are executed, the method in any one of the foregoing embodiments is implemented. The readable storage medium may include any medium that can store program code, such as a USB flash drive, a removable hard disk, a read-only memory, a random access memory, a magnetic disk, or an optical disc.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code. This application is described with reference to the flowcharts and/or the block diagrams of the method, the apparatus (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

## Claims

1. A communication method, comprising:
generating first information, wherein the first information indicates a third central unit CU to request, from a second CU, downlink configuration information used for transmission over an F1 interface, there is a radio resource control RRC connection between the second CU and a mobile termination MT of a relay node, and the third CU is a target donor-CU of a distributed unit DU of the relay node; and
sending the first information to the third CU.

2. The method according to claim 1, wherein the first information comprises identification information of the second CU, identification information of the DU of the relay node, and identification information for identifying the MT at the second CU.

3. The method according to claim 1 or 2, wherein before sending the first information to the third CU, the method further comprises:
receiving second information from the relay node, wherein the second information comprises the identification information of the DU of the relay node.

4. The method according to any one of claims 1 to 3, wherein before sending the first information to the third CU, the method further comprises:
selecting the third CU as the target donor-CU of the DU of the relay node, wherein an IP connection or an Xn interface exists, or an Xn interface is capable of being set up between the third CU and the second CU.

5. The method according to claim 4, wherein selecting the third CU as the target donor-CU of the DU of the relay node comprises:
selecting, based on a network segment to which an IP address belongs, the third CU that has the IP connection to the second CU as the target donor-CU of the DU of the relay node; or
selecting the third CU in a pre-configured target list as the target donor-CU of the DU of the relay node, wherein an IP connection or an Xn interface exists, or an Xn interface is capable of being set up between a CU in the target list and the second CU.

6. The method according to claim 3, wherein the second information is from the DU of the relay node, and the second information further comprises identification information of the third CU.

7. The method according to claim 6, wherein the second information indicates a first CU to trigger the third CU to request, from the second CU, the downlink configuration information used for the transmission over the F1 interface, and the first CU is a source donor-CU of the DU of the relay node.

8. A communication method, comprising:
receiving first information, wherein the first information indicates a third central unit CU to request, from a second CU, downlink configuration information used for transmission over an F1 interface, there is a radio resource control RRC connection between the second CU and a mobile termination MT of a relay node, and the third CU is a target donor-CU of a distributed unit DU of the relay node; and
sending third information to the second CU, wherein the third information is used to request the downlink configuration information used for the transmission over the F1 interface.

9. The method according to claim 8, wherein the first information comprises identification information of the second CU, identification information of the DU of the relay node, and identification information for identifying the MT at the second CU.

10. The method according to claim 8 or 9, wherein the third information is further used to request a binding relationship between the MT and the DU of the relay node.

11. The method according to any one of claims 8 to 10, wherein the first information is from the DU of the relay node, and the first information is carried in an F1 setup request message.

12. The method according to claim 8 or 9, wherein the first information is from the DU of the relay node, the first information comprises the identification information for identifying the MT at the second CU, and the method further comprises:
sending, to the second CU based on the identification information for identifying the MT at the second CU, information used to obtain the binding relationship between the DU of the relay node and the MT.

13. The method according to claim 12, wherein the identification information of the MT comprises at least one of the following: a BAP address, at the second CU, of the relay node to which the MT belongs, an IP address that is of the relay node to which the MT belongs and that is used for traffic transmission over the F1 interface, a cell radio network temporary identifier C-RNTI of the MT, and a serving cell identifier of the MT.

14. The method according to any one of claims 8 to 13, wherein the method further comprises:
sending fourth information to the second CU, wherein the fourth information comprises a correspondence between an IP address used for the transmission over the F1 interface and a DSCP or flow label used for the transmission over the F1 interface.

15. A communication method, comprising:
receiving fifth information, wherein the fifth information indicates a second central unit CU to send first information to a third CU, the first information indicates the third CU to request, from the second CU, downlink configuration information used for transmission over an F1 interface, there is a radio resource control RRC connection between the second CU and a mobile termination MT of a relay node, and the third CU is a target donor-CU of a distributed unit DU of the relay node; and
sending the first information to the third CU.

16. The method according to claim 15, wherein the fifth information is from the MT, and the fifth information comprises identification information of the third CU and identification information of the DU of the relay node.

17. The method according to claim 15, wherein the fifth information is from a source donor-CU of the DU of the relay node, and the fifth information comprises the identification information of the third CU, the identification information of the DU of the relay node, and identification information for identifying the MT at the second CU.

18. The method according to any one of claims 15 to 17, wherein the first information comprises identification information of the second CU, the identification information of the DU of the relay node, and the identification information for identifying the MT at the second CU.

19. The method according to claim 18, wherein the first information indicates a binding relationship between the MT and the DU of the relay node.

20. A communication apparatus, comprising a module or a unit configured to implement the method according to any one of claims 1 to 7.

21. A communication apparatus, comprising a module or a unit configured to implement the method according to any one of claims 8 to 14.

22. A communication apparatus, comprising a module or a unit configured to implement the method according to any one of claims 15 to 19.

23. A communication system, wherein the communication system comprises the communication apparatus according to claim 20 and the communication apparatus according to claim 21, or the communication system comprises the communication apparatus according to claim 21 and the communication apparatus according to claim 22.

24. A computer-readable storage medium, wherein the computer-readable storage medium stores a computer program; the computer program comprises program instructions; and when the program instructions are executed, a computer is enabled to perform the method according to any one of claims 1 to 19.

25. A communication apparatus, comprising a processor, wherein the processor is coupled to a memory, the memory stores computer program instructions, and the processor is configured to execute the computer program instructions, to enable the communication apparatus to perform the method according to any one of claims 1 to 19.

26. A computer program product, wherein the computer program product comprises a computer program; the computer program comprises program instructions; and when the program instructions are executed, a computer is enabled to perform the method according to any one of claims 1 to 19.

27. A communication method, comprising:
generating first information, wherein the first information indicates a third central unit CU to send a cross-topology traffic migration request to a second CU, there is a radio resource control RRC connection between the second CU and a mobile termination MT of a relay node, and the third CU is a target donor-CU of a distributed unit DU of the relay node; and
sending the first information to the third CU.

28. The method according to claim 27, wherein the first information comprises identification information of the second CU and a backhaul adaptation protocol BAP address, at the second CU, of the relay node to which the MT belongs.

29. The method according to claim 28, wherein the identification information of the second CU comprises a gNodeB identifier gNB ID of the second CU.

30. The method according to any one of claims 27 to 29, wherein the first information is carried in an F1 setup request message or a gNodeB distributed unit configuration update GNB-DU CONFIGURATION UPDATE message.

31. A communication method, comprising:
receiving first information, wherein the first information indicates a third central unit CU to send a cross-topology traffic migration request to a second CU, there is a radio resource control RRC connection between the second CU and a mobile termination MT of a relay node, and the third CU is a target donor-CU of a distributed unit DU of the relay node; and
sending the cross-topology traffic migration request to the second CU.

32. The method according to claim 31, wherein the first information comprises identification information of the second CU and a backhaul adaptation protocol BAP address, at the second CU, of the relay node to which the MT belongs.

33. The method according to claim 32, wherein the identification information of the second CU comprises a gNodeB identifier gNB ID of the second CU.

34. The method according to any one of claims 31 to 33, wherein the first information is carried in an F1 setup request message or a gNodeB distributed unit configuration update GNB-DU CONFIGURATION UPDATE message.

35. The method according to any one of claims 31 to 34, wherein sending the cross-topology traffic migration request to the second CU comprises:
when a user equipment Xn interface protocol identifier UE XnAP ID of the MT at the second CU is not obtained, sending, to the second CU, the cross-topology traffic migration request that carries the BAP address, at the second CU, of the relay node to which the MT belongs.

36. A communication method, comprising:
receiving an F1 setup request message, wherein the F1 setup request message comprises a BAP address used for transmission over a target F1 interface; and
when the BAP address is allocated by a third central unit CU, determining a binding relationship between a mobile termination MT of a relay node and a distributed unit DU of the relay node based on the BAP address.

37. The method according to claim 36, wherein that the BAP address is not allocated by the third CU means that the F1 setup request message also indicates an identifier of a second CU that allocates the BAP address.

38. A communication method, comprising:
receiving first information, wherein the first information indicates a third central unit CU to send a cross-topology traffic migration request to a second CU, there is a radio resource control RRC connection between the second CU and a mobile termination MT of a relay node, the third CU is a target donor-CU of a distributed unit DU of the relay node, and the first information comprises a BAP address, at the second CU, of the relay node to which the MT belongs; and
sending, to the second CU, information carrying the BAP address, at the second CU, of the relay node to which the MT belongs.

39. The method according to claim 38, wherein sending, to the second CU, the information carrying the BAP address, at the second CU, of the relay node to which the MT belongs comprises:
sending third information to the second CU, wherein the third information comprises the BAP address, and the third information is carried in the cross-topology traffic migration request.

40. The method according to claim 38 or 39, wherein sending, to the second CU, the information carrying the BAP address, at the second CU, of the relay node to which the MT belongs comprises:
when a user equipment Xn interface protocol identifier UE XnAP ID of the MT at the second CU is not obtained, sending, to the second CU, the information that carries the BAP address.

41. A communication method, comprising:
receiving information carrying a BAP address, at a second CU, of a relay node to which a mobile termination MT belongs, wherein there is a radio resource control RRC connection between the second CU and the MT; and
generating and sending, to a third CU, a user equipment Xn interface protocol identifier UE XnAP ID of the MT at the second CU.

42. The method according to claim 41, wherein the information about the BAP address is carried in a cross-topology traffic migration request.

43. A communication apparatus, comprising a module or a unit configured to implement the method according to any one of claims 27 to 30.

44. A communication apparatus, comprising a module or a unit configured to implement the method according to any one of claims 31 to 35.

45. A communication apparatus, comprising a module or a unit configured to implement the method according to claim 36 or 37.

46. A communication apparatus, comprising a module or a unit configured to implement the method according to any one of claims 38 to 40.

47. A communication apparatus, comprising a module or a unit configured to implement the method according to claim 41 or 42.

48. A communication system, wherein the communication system comprises the communication apparatus according to claim 43 and the communication apparatus according to claim 44, or the communication system comprises the communication apparatus according to claim 46 and the communication apparatus according to claim 47.

49. A computer-readable storage medium, wherein the computer-readable storage medium stores a computer program; the computer program comprises program instructions; and when the program instructions are executed, a computer is enabled to perform the method according to any one of claims 27 to 42.

50. A communication apparatus, comprising a processor, wherein the processor is coupled to a memory, the memory stores computer program instructions, and the processor is configured to execute the computer program instructions, to enable the communication apparatus to perform the method according to any one of claims 27 to 42.

51. A computer program product, wherein the computer program product comprises a computer program; the computer program comprises program instructions; and when the program instructions are executed, a computer is enabled to perform the method according to any one of claims 27 to 42.
